# EUROPEAN PATENT APPLICATION

(11) **EP 4 283 389 A1**
(43) Date of publication of application: **29.11.2023**
(21) Application number: 22742878.6
(22) Date of filing: 21.01.2022
(51) Int. Cl.: G03B 5/00, G03B 17/12, H04N 5/225, G03B 13/36, G03B 30/00

(54) **CAMERA ACTUATOR AND CAMERA MODULE INCLUDING SAME**

(30) Priority: 21.01.2021 KR 20210008663; 25.01.2021 KR 20210010163
(71) Applicant: LG Innotek Co., Ltd., Seoul 07796 (KR)
(72) Inventor: SEO, Eun Sung, Seoul 07796 (KR); KIM, Ji Sung, Seoul 07796 (KR); BONG, Sang Hoon, Seoul 07796 (KR); SONG, Yun Sang, Seoul 07796 (KR)
(74) Representative: DREISS Patentanwälte PartG mbB
(86) International application number: PCT/KR2022/001131
(87) International publication number: WO 2022/158902

(57) **Abstract**

A camera actuator disclosed to an embodiment includes a first lens assembly, a second lens assembly disposed under the first lens assembly and including a second lens portion, a third lens assembly disposed under the second lens assembly, a driving portion for moving the second lens assembly in an optical axis direction, and a magnet holder disposed between the second lens assembly and the driving portion. The driving portion includes a magnet disposed on the magnet holder, a yoke facing the magnet in a first direction, and a coil disposed between the magnet and the yoke, and a center of the yoke may be disposed on a plane different from a first plane passing through the optical axis and a center of the magnet.

## Description

### [Technical Field]

The embodiment relates to a camera actuator and a camera module including the same.

### [Background Art]

The camera module performs a function of capturing a subject and storing it as an image or video, and is installed in various devices such as mobile terminals such as mobile phones, laptops, drones, and vehicles. In general, the above-described device is equipped with an ultrasmall camera module, and the camera module may perform an autofocus (AF) function of aligning the focal length of a lens by automatically adjusting a distance between an image sensor and a lens. In addition, the camera module may perform a zooming function of zooming up or zooming out by increasing or decreasing the magnification of a distant subject through a zoom lens. The camera module employs an image stabilization (IS) technology to correct or prevent image stabilization due to camera movement caused by an unstable fixing device or a user's movement. Such the image stabilization (IS) technology includes an optical image stabilizer (OIS) technology and an image stabilizer technology using an image sensor. Here, OIS technology is a technology that corrects motion by changing the path of light, and image stabilization technology using an image sensor is a technology that corrects motion in a mechanical and electronic way, and OIS technology has recently been adopted more. The camera module may include a reflective member and a driving portion capable of changing a path of light to implement the OIS function. In detail, the camera module may change the path of light by controlling the position of the reflective member with a driving force applied from the driving portion. As such a driving portion, the position of the reflective member may be controlled by using a driving portion of a voice coil motor (VCM) type including a coil, a magnet, and the like. An actuator may be used in the camera module to provide an autofocus or zooming function. For example, the actuator may include a magnet, a coil, and a ball bearing, and may control the position of the lens using a driving force formed by electromagnetic force. However, frictional torque is generated when the lens is moved by the mechanical movement of the actuator, and driving force is reduced, power consumption is increased, and control characteristics are deteriorated due to the frictional torque. When the actuator includes a ball bearing, the camera module needs to effectively control mechanical movement of the actuator to prevent deterioration of optical properties. For example, the camera module needs to strictly manage the ball bearing and components in contact with the ball bearing, for example, the size and shape of a guide portion for guiding movement of the ball bearing. However, as the number of management factors increases, there is a problem in that the dispersion is widened and product defects are also increased.

In order to derive the best optical characteristics using a plurality of lens groups in the camera module, the distance and alignment between the plurality of lens groups, and the alignment between the plurality of lens groups and the image sensor must be aligned, when the a center of the spherical surface between the lens groups deviates from the optical axis, tilt, or the center of the lens group and the image sensor do not align, there is a problem of deteriorating image quality or resolution.

When the camera module includes an actuator that controls the position of the lens group, optical performance may be realized only when the plurality of lens groups and the image sensor are aligned within an error range of several micrometers. When it is out of this error, there is a problem that an out-of-focus region occurs or an object located at a near distance cannot be focused. Therefore, a new structure capable of solving the above problems is required.

### [Disclosure]

### [Technical Problem]

An embodiment of the invention may provide camera actuators and camera modules that may have improved optical properties. An embodiment of the invention may provide a camera actuator and a camera module capable of reducing component dispersion and assembly failure.

An embodiment provides a camera actuator and a camera module capable of improving alignment characteristics of a lens assembly, improving assembly characteristics and reducing assembly defects when manufacturing a camera actuator. In addition, it provides a camera actuator and a camera module capable of preventing problems such as de-centering, tilting, and friction occurring when a lens group is moved.

An embodiment provides a camera actuator and a camera module that provide improved autofocus (AF) functions for subjects located at various distances and may effectively control vibrations caused by hand shaking. An embodiment provides a camera actuator and a camera module that may be provided compactly.

### [Technical Solution]

A camera actuator according to an embodiment includes a first lens assembly, a second lens assembly disposed under the first lens assembly and including a second lens portion, a third lens assembly disposed under the second lens assembly, a driving portion for moving the second lens assembly in an optical axis direction and a magnet holder disposed between the second lens assembly and the driving portion, wherein the driving portion includes a magnet disposed on the magnet holder, a yoke facing the magnet in a first direction, a coil may be disposed between the magnet and the yoke, and a center of the yoke may be disposed on a plane different from a first plane passing through the optical axis and a center of the magnet.

A center of the coil may be disposed on the same plane as the first plane. The center of the yoke may be disposed at a position higher than the centers of the magnet and the coil based on the optical axis and a third direction perpendicular to the first direction. The center of the yoke may be disposed at a position lower than the centers of the magnet and the coil based on the optical axis and the third direction perpendicular to the first direction.

The camera actuator further comprises a first guide portion disposed on one side of the magnet holder and a ball bearing disposed between the magnet holder and the first guide portion, and the first guide portion may be disposed between the magnet holder and the yoke. The ball bearing based on the optical axis and the third direction perpendicular to the first direction may include a first ball bearing disposed at a position higher than the optical axis and a second ball bearing disposed at a position lower than the optical axis. The yoke based on the first direction may overlap the first ball bearing and may not overlap the second ball bearing.

The magnet holder includes a first stepped portion in contact with the first ball bearing and a second stepped portion in contact with the second ball bearing, and the first and second stepped portions may have symmetrical shape to each other with respect to a virtual first line passing through the optical axis and the center of the magnet holder in the first direction.

The first guide portion includes a first rail in contact with the first ball bearing and facing the first stepped portion, and a second rail in contact with the second ball bearing and facing the second stepped portion, wherein the first and second rails may have asymmetrical shapes to each other based on the first line. The first stepped portion includes a first stepped surface facing the first ball bearing in the first direction and a second stepped surface facing the first ball bearing in the third direction, and the second stepped portion includes a third stepped surface facing the second ball bearing in the third direction and a fourth stepped portion facing the second ball bearing in the third direction, and an angle formed by the first and second stepped surfaces may be the same as an angle formed by the third and fourth stepped surfaces.

The first rail includes a first rail surface facing the first ball bearing in the first direction and a second rail surface facing the first ball bearing in the second direction, and the second rail includes a third rail surface facing the second ball bearing in the first direction and a fourth rail surface facing the second ball bearing in the second direction, and an angle formed by the first and second rail surfaces may be the same as an angle formed by the third and fourth rail surfaces. An angle formed by the first and second rail surfaces may be greater than an angle formed by the first and second stepped surfaces. A distance from the first line to the fourth rail surface based on the third direction may be longer than a distance from the first line to the second rail surface. A distance between the first stepped surface and the first rail surface in the first direction may be equal to a distance between the third stepped surface and the third rail surface in the first direction. A distance between the second stepped surface and the second rail surface in the third direction may be different from a distance between the fourth stepped surface and the fourth rail surface in the third direction.

The first ball bearing is in contact with the first stepped surface, the second stepped surface, the first rail surface, and the second rail surface, and the second ball bearing may be in contact with at least two of the third stepped surface, the fourth stepped surface, and the third rail surface and the fourth rail surface. The second ball bearing may contact the third stepped surface and the third rail surface, and may be spaced apart from the fourth stepped surface and the fourth rail surface. A distance between the second stepped surface and the second rail surface in the third direction may be smaller than a distance between the fourth stepped surface and the fourth rail surface in the third direction.

A camera actuator according to an embodiment includes a first lens assembly, a second lens assembly disposed under the first lens assembly and including a second lens portion, a third lens assembly disposed under the second lens assembly, a driving portion for moving the second lens assembly in an optical axis direction and a magnet holder disposed between the second lens assembly and the driving portion, wherein the second lens assembly includes a protruding portion disposed on one side surface facing the magnet holder, the magnet holder is disposed on one side surface facing the one side surface of the second lens assembly and includes a concave portion into which the protruding portion is inserted, the one side surface of the second lens assembly is in contact with one side surface of the magnet holder, and the protruding portion and the concave portion may be spaced apart from each other.

The one side surface of the second lens assembly and the one side surface of the magnet holder may be parallel and directly contact each other. An adhesive member disposed between the protruding portion and the concave portion may be coupled to the second lens assembly and the magnet holder by the adhesive member. The adhesive member may be spaced apart from the one side surface of the second lens assembly and the one side surface of the magnet holder.

The protruding portion of the second lens assembly includes a first protruding portion and a second protruding portion protruding in a first direction toward the concave portion of the magnet holder, and the magnet holder has a first concave portion disposed at a region corresponding to the first protruding portion and a second concave portion disposed at a region corresponding to the second protruding portion. A height of the protruding portion in the first direction is smaller than a depth of the concave portion in the first direction, a width of the protruding portion in a third direction is smaller than a width of the concave portion in the third direction, a width of the protruding portion in the third direction is smaller than the width of the concave portion in the third direction, and the third direction may be a direction perpendicular to the first direction.

The first concave portion includes a first inner surface extending from the one side surface of the magnet holder and a first bottom surface extending from one end of the first inner surface, and the second concave portion includes a second inner surface extending from one end of the first bottom surface and a second bottom surface extending from one end of the second inner surface, and the first and second inner surfaces may have different inclination angles from each other with respect to the one side surface of the magnet holder. The first protruding portion includes a first outer surface extending from the one side surface of the second lens assembly and a third bottom surface extending from one end of the first outer surface, and the second protruding portion includes a second outer surface extending from one end of the third bottom surface and a fourth bottom surface extending from one end of the second outer surface, and the first and second outer surface may have different inclination angles from each other with respect to the one side surface of the second lens assembly.

The second concave portion includes a 2-1 concave portion and a 2-2 concave portion spaced apart from the 2-1 concave portion in a second direction, the second direction may be an optical axis direction of the second lens assembly and may be a direction perpendicular to the first direction. The protruding portion based on the first direction may overlap the 2-1 concave portion and may not overlap the 2-2 concave portion. The magnet holder may include a bridge portion disposed between the 2-1 concave portion and the 2-2 concave portion. An upper surface of the bridge portion may be disposed on the same plane as a bottom surface of the first concave portion.

The driving portion may include a magnet disposed on the magnet holder, and the magnet may be disposed on another side surface opposite to one side surface of the magnet holder. A first guide portion disposed on the other side surface of the magnet holder and a ball bearing disposed between the magnet holder and the first guide portion, wherein the ball bearing may not overlap with the second protruding portion and the second concave portion in the first direction.

The camera module according to the embodiment includes a first camera actuator and a second camera actuator, the first camera actuator performs an autofocusing or zoom function, and the second camera actuator has an OIS (Optical Image Stabilizer) function, and the first camera actuator may include the camera actuator disclosed above.

Light incident on the camera module from the outside may be incident on the first camera actuator through the second camera actuator.

### [Advantageous Effects]

A camera actuator and a camera module according to an embodiment of the invention may have improved optical characteristics. In detail, the first camera actuator may include a yoke whose center is located higher than the center of the magnet. In this case, attractive forces are generated between the magnet and the yoke in vertical and horizontal directions, and the first guide portion guiding the second lens assembly may have an asymmetrical shape. Accordingly, the ball bearing disposed between the first guide portion and the magnet holder may reduce the number of contact points between the first guide portion and the magnet holder. Accordingly, the first camera actuator may have an increased degree of freedom in terms of size and shape of the rail of the first guide portion, and may have improved efficiency by reducing the distribution of defects.

The camera actuator and camera module according to the embodiment can effectively control the alignment characteristics of the second lens assembly and the distance from other lens assemblies by using attraction in vertical and horizontal directions formed between the magnet and the yoke. Accordingly, the first camera actuator may have improved image quality and resolution, and may effectively focus on a subject when photographing a subject located at various distances, for example, infinity or a near distance (about 30 mm).

The camera actuator and camera module according to the embodiment may have improved reliability. In detail, the embodiment may include a second lens assembly including a protruding portion and a magnet holder including a concave portion. In this case, each of the protruding portion and the concave portion may have a set depth, height, width, and inclination angle. Accordingly, a space in which an adhesive member is disposed may be secured between the protruding portion and the concave portion, and the second lens assembly and the magnet holder may be firmly coupled to each other through the adhesive member.

The camera actuator and camera module according to the embodiment may have improved alignment characteristics. In detail, when the second lens assembly and the magnet holder are coupled, the second lens assembly may be effectively guided to the protruding portion and the concave portion, and one side surface of the second lens assembly and one side surface of the magnet holder that are parallel to each other may be disposed in direct contact with each other. Accordingly, when the two components are combined, the alignment characteristics of the second lens assembly may be controlled through one side surface of the two components.

As described above, as the protruding portion and the concave portion have a set size and shape, it is possible to effectively control the amount of the adhesive member and to control the alignment characteristics of the second lens assembly by controlling the region where the adhesive member may be disposed. Accordingly, the embodiment may effectively focus on objects located at various distances, such as infinity to near distance (about 30 mm), by aligning the lens assemblies within an error range.

The camera actuator and camera module according to the embodiment may be provided more compactly as they may shoot a subject at a fixed TTL value without increasing the overall length of the optical system when photographing a subject located at infinity or a near distance (about 30 mm).

The camera actuator and camera module according to the embodiment may prevent or minimize lens decentering or tilting during an autofocus (AF) operation. Accordingly, the embodiment may improve align characteristics between a plurality of lens groups, thereby preventing a change in angle of view or occurrence of out-of-focus, and thus, improved image quality and resolution.

The camera actuator and camera module according to the embodiment may have improved optical characteristics. In detail, the camera actuator and camera module according to the embodiment include a driving portion for controlling the position of the prism, and the position of the prism may be precisely controlled by the driving portion. Accordingly, the embodiment may effectively control vibration caused by hand shaking, thereby providing an improved OIS function.

### [Description of Drawings]

FIG. 1 is a perspective view of a camera module according to an embodiment.
FIG. 2 is a perspective view in which some components of the camera module of FIG. 1 are omitted.
FIG. 3 is a top view of a first camera actuator according to an embodiment.
FIG. 4 is a cross-sectional view illustrating a line A-A' of FIG. 3.
FIG. 5 is a top view of the first camera actuator of FIG. 3 in which some components are omitted.
FIGS. 6 and 7 are exploded perspective views in which some components of the first camera actuator of FIG. 3 are omitted.
FIG. 8 is a view for explaining a disposition relationship between a second lens assembly and a magnet holder in a first camera actuator according to an embodiment.
FIG. 9 is a diagram for explaining a disposition relationship between a magnet holder and a magnet in a first camera actuator according to an embodiment.
FIG. 10 is a side view of a magnet holder according to an embodiment.
FIG. 11 is a side view of a first guide portion according to an embodiment.
FIG. 12 is an exemplary view of driving in a first camera actuator according to an embodiment.
FIGS. 13 and 14 are diagrams for explaining the attraction generated by the driving portion.
FIGS. 15 to 18 are diagrams for explaining a disposition relationship of a first driving portion in a first camera actuator according to an embodiment.
FIGS. 19 and 20 are diagrams for explaining arrangement relationships of ball bearings in a first camera actuator according to an embodiment.
FIGS. 21 to 23 are diagrams for explaining other arrangement relationships of the first driving portion in the first camera actuator according to the exemplary embodiment.
FIGS. 24 and 25 are views for explaining a first camera actuator according to an embodiment and a comparative example.
FIG. 26 is a perspective view of a magnet holder according to an embodiment.
FIG. 27 is a top view of a magnet holder according to an embodiment.
FIG. 28 is a cross-sectional view illustrating a line B-B' of FIG. 27.
FIG. 29 a cross-sectional view illustrating a line C-C' of FIG. 27.
FIG. 30 is a cross-sectional view illustrating a coupling relationship between a second lens assembly and a magnet holder according to an embodiment.
FIG. 31 is an enlarged view illustrating an enlarged region A1 of FIG. 30.
FIG. 32 is a perspective view of a second camera actuator according to an embodiment.
FIG. 33 is an exploded perspective view of a second camera actuator according to an embodiment.
FIG. 34 is a perspective view of a driving portion of a second camera actuator according to an embodiment.
FIG. 35 is a perspective view of a housing of a second camera actuator according to an embodiment.
FIG. 36 is a perspective view of a prism holder of a second camera actuator according to an embodiment.
FIG. 37 and 38 are views of arrangement relationships among a prism unit, a moving plate, and a housing holder of a second camera actuator according to an embodiment.
FIG. 39 a cross-sectional view illustrating a line D-D' of FIG. 21.
FIG. 40 a cross-sectional view illustrating a line E-E' of FIG. 21.
FIG. 41 is a perspective view of a mobile terminal to which a camera module according to an embodiment is applied.
FIG. 42 is a perspective view of a vehicle to which a camera module according to an embodiment is applied.

### [Best Mode]

Hereinafter, preferred embodiments of the invention will be described in detail with reference to the accompanying drawings. A technical spirit of the invention is not limited to some embodiments to be described, and may be implemented in various other forms, and one or more of the components may be selectively combined and substituted for use within the scope of the technical spirit of the invention. In addition, the terms (including technical and scientific terms) used in the embodiments of the invention, unless specifically defined and described explicitly, may be interpreted in a meaning that may be generally understood by those having ordinary skill in the art to which the invention pertains, and terms that are commonly used such as terms defined in a dictionary should be able to interpret their meanings in consideration of the contextual meaning of the relevant technology.

The terms used in the embodiments of the invention are for explaining the embodiments and are not intended to limit the invention. In this specification, the singular forms also may include plural forms unless otherwise specifically stated in a phrase, and in the case in which at least one (or one or more) of A and (and) B, C is stated, it may include one or more of all combinations that may be combined with A, B, and C. In describing the components of the embodiments of the invention, terms such as first, second, A, B, (a), and (b) may be used. Such terms are only for distinguishing the component from other component, and may not be determined by the term by the nature, sequence or procedure etc. of the corresponding constituent element. And when it is described that a component is "connected ", "coupled" or "joined" to another component, the description may include not only being directly connected, coupled or joined to the other component but also being "connected ", "coupled" or "joined" by another component between the component and the other component. In addition, in the case of being described as being formed or disposed "above (on)" or "below (under)" of each component, the description includes not only when two components are in direct contact with each other, but also when one or more other components are formed or disposed between the two components. In addition, when expressed as "above (on)" or "below (under)", it may refer to a downward direction as well as an upward direction with respect to one element.

In the description of the embodiment of the invention, the first direction may mean the x-axis direction shown in the drawing, and the second direction may be a direction different from the first direction. For example, the second direction may mean a y-axis direction shown in the drawing as a direction perpendicular to the first direction. Also, the third direction may refer to the z-axis direction shown in the figure, and the third direction may be a direction different from the first and second directions. For example, the third direction may be a direction perpendicular to the first and second directions. The y-axis direction, which is the second direction in the x-axis, y-axis, and z-axis directions shown in the figure, may mean an optical axis direction or a direction parallel thereto.

### <Camera module 10>

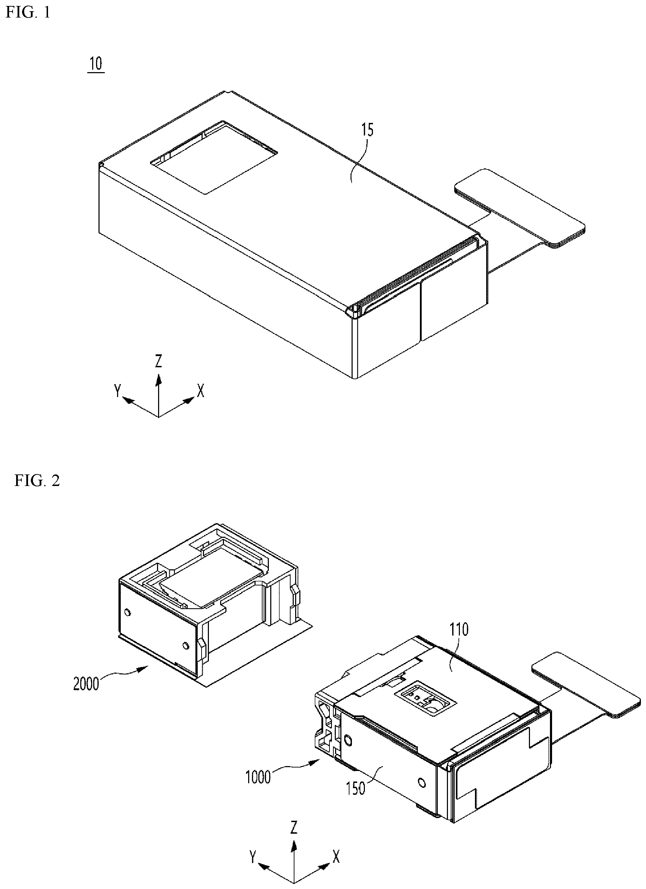

FIG. 1 is a perspective view of a camera module according to an embodiment, and FIG. 2 is a perspective view of the camera module of FIG. 1 in which some components are omitted.

Referring to FIGS. 1 and 2, a camera module 10 according to an embodiment may include one or a plurality of camera actuators. For example, the camera module 10 may include a first camera actuator 1000 and a second camera actuator 2000. The camera module 10 may include a protective case 15 accommodating the first camera actuator 1000 and the second camera actuator 2000. The first camera actuator 1000 may be an autofocus (AF) actuator. Also, the first camera actuator 1000 may be an autofocus (AF) and zoom actuator. The first camera actuator 1000 may include a plurality of lens groups. Each of the plurality of lens groups may include at least one lens. The first camera actuator 1000 may provide an autofocus (AF) function or an autofocus (AF) and zoom function by moving at least one lens group or at least one lens in an optical axis direction according to a control signal from a control portion. The second camera actuator 2000 may be an optical image stabilizer (OIS) actuator. In this case, light incident on the camera module 10 from the outside may be incident on the second camera actuator 2000 first. In addition, the path of the light incident on the second camera actuator 2000 may be changed to be incident on the first camera actuator 1000. Subsequently, the light passing through the first camera actuator 1000 may be incident to the image sensor 280.

### <First camera actuator 1000>

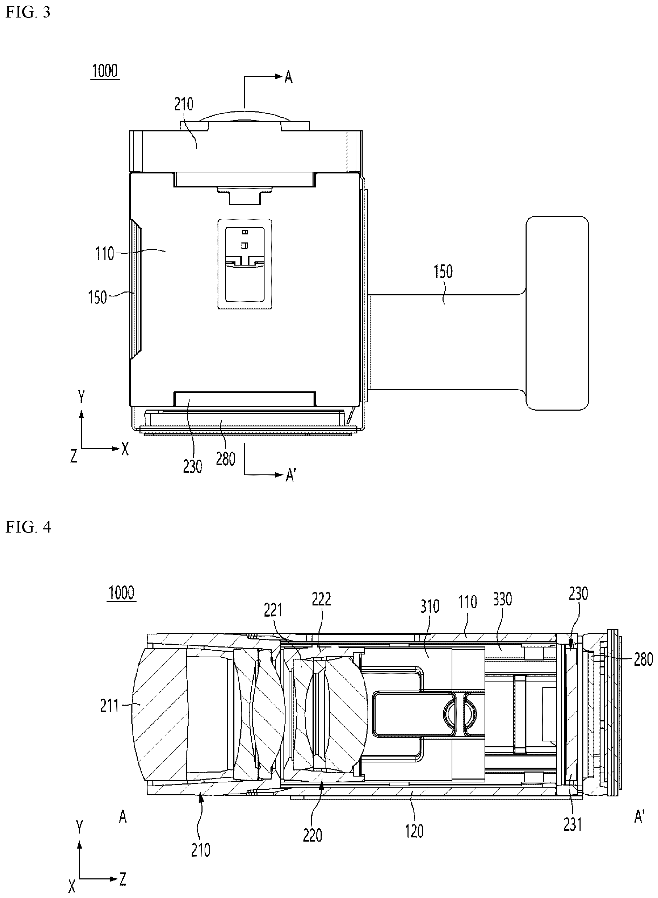

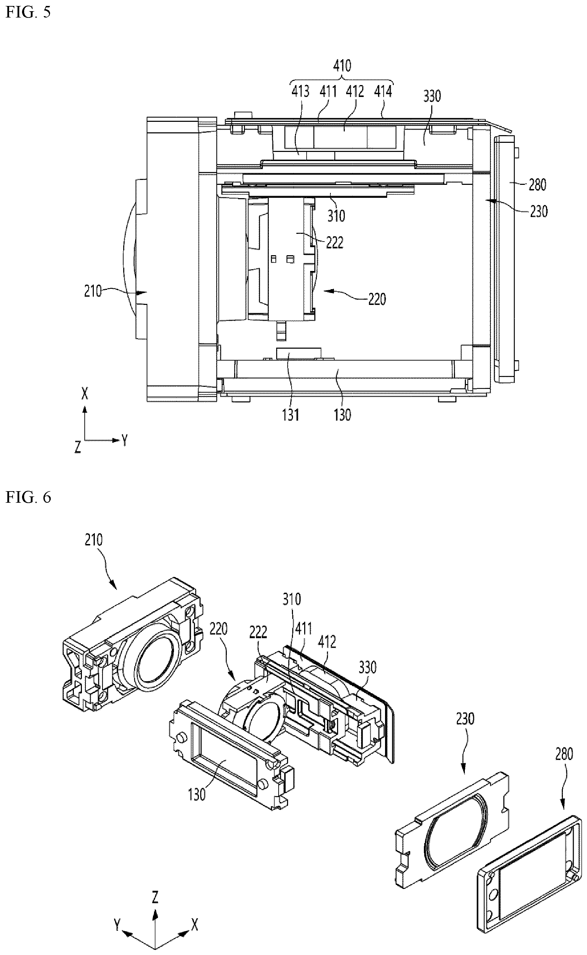

Referring to FIGS. 3 to 9, the first camera actuator 1000 may include a cover member, a first lens assembly 210, a second lens assembly 220, a third lens assembly 230, an image sensor portion, a first circuit board 150, a first driving portion 410, a magnet holder 310 and a first guide portion 330. The cover member may include an upper cover 110 and a lower cover 120. The upper cover 110 and the lower cover 120 may be respectively disposed above and below the first to third lens assemblies 210, 220, and 230. The upper cover 110 and the lower cover 120 may protect a lens assembly disposed therebetween. The upper cover 110 and the lower cover 120 may cover part or all of the first to third lens assemblies 210, 220, and 230 and may be disposed.

The first lens assembly 210 may be disposed adjacent to the second camera actuator 2000. For example, the first lens assembly 210 may be disposed under the second camera actuator 2000 based on an optical axis direction (y-axis direction, second direction). In detail, the first lens assembly 210 may be disposed closer to the image sensor 280 than the second camera actuator 2000. The first lens assembly 210 may include a first lens portion (not shown) including at least one lens. The first lens portion may include at least one first lens 211 and a first lens barrel (not shown) receiving the first lens 211. The first lens assembly 210 may be disposed at a set position. The first lens assembly 210 may be disposed at a fixed position without being moved by an applied driving force.

The second lens assembly 220 may be disposed adjacent to the first lens assembly 210. For example, the second lens assembly 220 may be disposed under the first lens assembly 210 based on the optical axis direction (y-axis direction). In detail, the second lens assembly 220 may be located farther from the second camera actuator 2000 than the first lens assembly 210. That is, the first lens assembly 210 may be disposed between the second lens assembly 220 and the second camera actuator 2000. The second lens assembly 220 may include a second lens portion (not shown) including at least one lens. The second lens portion may include at least one second lens 221 and a second lens barrel 222 receiving the second lens 221. For example, the number of second lenses 221 may be less than or equal to the number of first lenses 211. The second lens assembly 220 may be disposed at a set position. The second lens assembly 220 may be provided to be movable in an optical axis direction within a predetermined range by an applied driving force.

The third lens assembly 230 may be disposed adjacent to the second lens assembly 220. For example, the third lens assembly 230 may be disposed under the second lens assembly 220 based on the optical axis direction (y-axis direction). In detail, the third lens assembly 230 may be located farther from the second camera actuator 2000 than the first and second lens assemblies 210 and 220. That is, the second lens assembly 220 may be disposed between the third lens assembly 230 and the first lens assembly 210. The third lens assembly 230 may include a third lens portion (not shown) including at least one lens. The third lens portion may include at least one third lens 231 and a third lens barrel (not shown) receiving the third lens 231. For example, the number of third lenses 231 may be less than the number of first lenses 211. Also, the number of third lenses 231 may be less than or equal to the number of second lenses 221. The third lens assembly 230 may be disposed at a set position. The third lens assembly 230 may be disposed at a fixed position without moving by an applied driving force.

The image sensor portion may be disposed adjacent to the third lens assembly 230. For example, the image sensor portion may be disposed under the third lens assembly 230 based on an optical axis direction (y-axis direction). Based on the optical axis direction (y-axis direction), the image sensor portion may be positioned further apart from the second camera actuator 2000 than the first to third lens assemblies 210, 220, and 230. The light incident to the first camera actuator 1000 through the second camera actuator 2000 may pass sequentially through the first lens assembly 210, the second lens assembly 220, and the third lens assembly 230 and be provided to the image sensor portion.

The image sensor portion may include an image sensor 280. The image sensor 280 may include a charge coupled device (CCD) or a complementary metal oxide semiconductor (CMOS). The image sensor 280 may collect light passing through the order of the first to third lens portions and convert the collected light into an image. The image sensor 280 may be aligned so that its center coincides with the optical axes of the lenses 211, 221, and 231 of the first to third lens portions. The optical axis of the image sensor 280 and the centers of the lenses 211, 221, and 231 may be aligned.

The first circuit board 150 may be disposed outside the second camera actuator 2000. The first circuit board 150 may be disposed on the cover member. The first circuit board 150 may be disposed between the upper cover 110 and the lower cover 120. The first circuit board 150 may be connected to a power supply portion (not shown). Also, the first circuit board 150 may be connected to the image sensor 280 and the first driving portion 410. The first circuit board 150 may include a circuit board having a wiring pattern that may be electrically connected, such as a rigid printed circuit board (PCB), a flexible PCB, and a rigid flexible PCB.

The first driving portion 410 may be disposed on one side of the second lens assembly 220. For example, the first driving portion 410 may be disposed on one side of the second lens assembly 220 facing the second lens assembly 220 in a first direction (x-axis direction). The first driving portion 410 may move the second lens assembly 220 in the optical axis direction. For example, the first driving portion 410 may move the second lens assembly 220 in an optical axis direction (y-axis direction, second direction) by a control signal of the control portion. The first driving portion 410 may include a first substrate 411, a coil 412, a magnet 413 and a yoke 414.

The first substrate 411 may be electrically connected to the first circuit board 150. Also, the first substrate 411 may be electrically connected to the coil 412. The first substrate 411 may include a circuit board having a wiring pattern that may be electrically connected, such as a rigid printed circuit board (PCB), a flexible PCB, and a rigid flexible PCB. The coil 412 may be disposed on the first substrate 411. The coil 412 may be disposed on one surface of the first substrate 411. The coil 412 may be disposed between the second lens assembly 220 and the first substrate 411. The coil 412 may be disposed facing one side of the second lens assembly 220 in the first direction (x-axis direction).

The magnet 413 may be disposed on the magnet holder 310. The magnet 413 may be disposed between the magnet holder 310 and the coil 412. The magnet 413 may be disposed facing the coil 412 in the first direction (x-axis direction). The yoke 414 may be disposed on the first substrate 411. The yoke 414 may be disposed on the other surface opposite to one surface of the first substrate 411. The first substrate 411 may be disposed between the coil 412 and the yoke 414. The yoke 414 may be disposed facing the magnet 413 with the ball bearing 350 interposed therebetween. The yoke 414 may generate an attractive force between the magnet 413 and the second lens assembly 220 coupled with the magnet holder 310 to be disposed at a set position. In addition, the yoke 414 may allow the ball bearing 350 disposed between the magnet holder 310 and the first guide portion 330 to effectively maintain point contact with the elements 310 and 330. A position detection sensor (not shown) may be further disposed on the first substrate 411. The position detection sensor may be a magnetic sensor. For example, the position detection sensor may be any one of a solid magnetic sensor such as a hall sensor, a coil type magnetic sensor, or a resonance type magnetic sensor. The position detection sensor may detect a position change of the magnet 413 to detect the position of the second lens assembly.

The magnet holder 310 may be disposed on one side 222a of the second lens assembly 220. In detail, the magnet holder 310 may be disposed on one side surface 222S1 of the second lens assembly 220. The magnet holder 310 may be disposed between the second lens assembly 220 and the first driving portion 410. The magnet holder 310 may be coupled to the second lens assembly 220. In detail, the magnet holder 310 may be physically coupled to the second lens barrel 222. For example, the magnet holder 310 may be physically coupled to the second lens barrel 222 through an adhesive member 500 disposed between one side 222a of the second lens assembly 220 and one side 310a of the magnet holder 310. The magnet holder 310 may include a space where the magnet 413 of the first driving portion 410 is disposed. For example, the magnet holder 310 may include a space formed on the other side 310b of the magnet holder 310 facing the coil 412, and the magnet 413 is disposed in the space. The magnet 413 may be disposed in the space of the magnet holder 310 and fixed to the magnet holder 310. The magnet holder 310 may move together with the second lens assembly 220 by a driving force applied from the first driving portion 410.

The magnet holder 310 may include a stepped portion 311. The stepped portion 311 may be disposed on the other side 310b of the magnet holder 310 facing the coil 412. The stepped portion 331 may be a region for disposing the ball bearing 350. One or a plurality of stepped portions 331 may be disposed on the other side 310b of the magnet holder 310. For example, the magnet holder 310 may include a plurality of stepped portions 331. The plurality of stepped portions 331 may include a first stepped portion 331a and a second stepped portion 331b. The first stepped portion 331a and the second stepped portion 331b may be spaced apart from each other. For example, the first stepped portion 331a and the second stepped portion 331b may be spaced apart in a third direction (z-axis direction). Based on the third direction (z-axis direction), the first stepped portion 331a may be disposed above the optical axis, and the second stepped portion 331b may be disposed below the optical axis.

The first guide portion 330 may be disposed on the other side 310b of the magnet holder 310. The first guide portion 330 may be disposed facing the magnet holder 310 in the first direction (x-axis direction). The first guide portion 330 may be disposed between the magnet holder 310 and the first driving portion 410. For example, the first guide portion 330 may be disposed between the magnet holder 310 and the yoke 414. The first guide portion 330 may guide the second lens assembly 220. For example, the first guide portion 330 may guide the second lens assembly 220 coupled to the magnet holder 310. In detail, the second lens assembly 220 may move in an optical axis direction (y-axis direction, second direction) along the first guide portion 330. The first guide portion 330 may include a rail 331. The rail 331 may be formed on one surface of the first guide portion 330 facing the magnet holder 310. One or a plurality of rails 331 may be disposed on one surface of the first guide portion 330. For example, the first guide portion 330 may include a plurality of rails 331.

The plurality of rails 331 may include a first rail 331a and a second rail 331b. The first rail 331a and the second rail 331b may be spaced apart from each other. For example, the first rail 331a and the second rail 331b may be spaced apart in a third direction (z-axis direction). Based on the third direction (z-axis direction), the first rail 331a may be disposed at a position higher than the optical axis, and the second rail 331b may be disposed at a position lower than the optical axis. The first rail 331a and the second rail 331b may extend in the same direction. For example, the first rail 331a and the second rail 331b may extend in the optical axis direction (y-axis direction, second direction). In addition, the first rail 331a and the second rail 331b may be disposed in regions corresponding to the first stepped portion 331a and the second stepped portion 331b. For example, the first rail 331a may be disposed to face the first stepped portion 331a in the first direction (x-axis direction), and the second rail 331b may be disposed to face the second stepped portion 331b in the first direction.

The first camera actuator 1000 according to the embodiment may include one or a plurality of ball bearings 350. The ball bearing 350 may be disposed between the magnet holder 310 and the first guide portion 330 to space the two components 310 and 330 apart. The second lens assembly 220 may move in the optical axis direction via the ball bearing 350 when a driving force is applied.

One or a plurality of ball bearings 350 may be disposed between the magnet holder 310 and the first guide portion 330. For example, the ball bearing 350 may include at least one first ball bearing 350a disposed between the first stepped portion 331a and the first rail 331a. The first ball bearing 350a may contact the first stepped portion 331a and the first rail 331a. The first ball bearing 350a may contact each of the first stepped portion 331a and the first rail 331a at least one point. The first ball bearing 350a may move along the first rail 331a. The ball bearing 350 may include at least one second ball bearing 350b disposed between the second stepped portion 331b and the second rail 331b. The second ball bearing 350b may contact the second stepped portion 331b and the second rail 331b. The second ball bearing 350b may contact the second stepped portion 331b and the second rail 331b at least one point, respectively. The second ball bearing 350b may move along the second rail 331b. The first ball bearing 350a and the second ball bearing 350b may be spaced apart from each other. For example, the first ball bearing 350a and the second ball bearing 350b may be spaced apart from each other in the third direction (z-axis direction). Based on the third direction (z-axis direction), the first ball bearing 350a may be disposed at a position higher than the optical axis, and the second ball bearing 350b may be disposed at position lower than the optical axis.

The first camera actuator 1000 may further include a partition wall member 130. The partition wall member 130 may be disposed on the other side opposite to one side of the second lens assembly 220. The partition wall member 130 may have a shape extending in the optical axis direction (second direction, y-axis direction). The partition wall member 130 may be disposed between the first lens assembly 210 and the third lens assembly 230. The partition wall member 130 may connect the first and third lens assemblies 210 and 230. For example, one end of the partition wall member 130 may be connected to the first lens assembly 210 and the other end of the partition wall member 130 may be connected to the third lens assembly 230. The partition wall member 130 may support the first lens assembly 210 and the third lens assembly 230. In addition, the partition wall member 130 may be fixed so that the first lens assembly 210 and the third lens assembly 230 are disposed at set positions. The partition wall member 130 may include a stopper 131. The stopper 131 may be disposed on one surface of the partition wall member 130 facing the second lens assembly 220. The stopper 131 may be disposed in a region overlapping the second lens assembly 220 in the first direction (x-axis direction). The stopper 131 may prevent the second lens assembly 220 from excessively moving in the optical axis direction (y-axis direction). A portion of the first circuit board 150 may be disposed on the other surface opposite to one surface of the partition wall member 130.

The first guide portion 330 according to the embodiment may include a plurality of rails 331. Accordingly, the embodiment has the effect of securing accuracy with the other even if one rail 331 is damaged when adjusting the position of the second lens assembly 220. In addition, even if the friction force issue of the ball bearing 350 occurs on any one rail 331, the ball bearing 350 may be operated effectively by rolling through the remaining rail. As the first guide portion 330 includes a plurality of rails 331, the alignment characteristics of the second lens assembly 220 and the distance with other lens assemblies may be effectively controlled, and there is an effect of preventing the focus from deviating. Accordingly, the first camera actuator 1000 according to the embodiment may have improved image quality and resolution, and may effectively focus on objects located at various distances, for example, infinity or near distance.

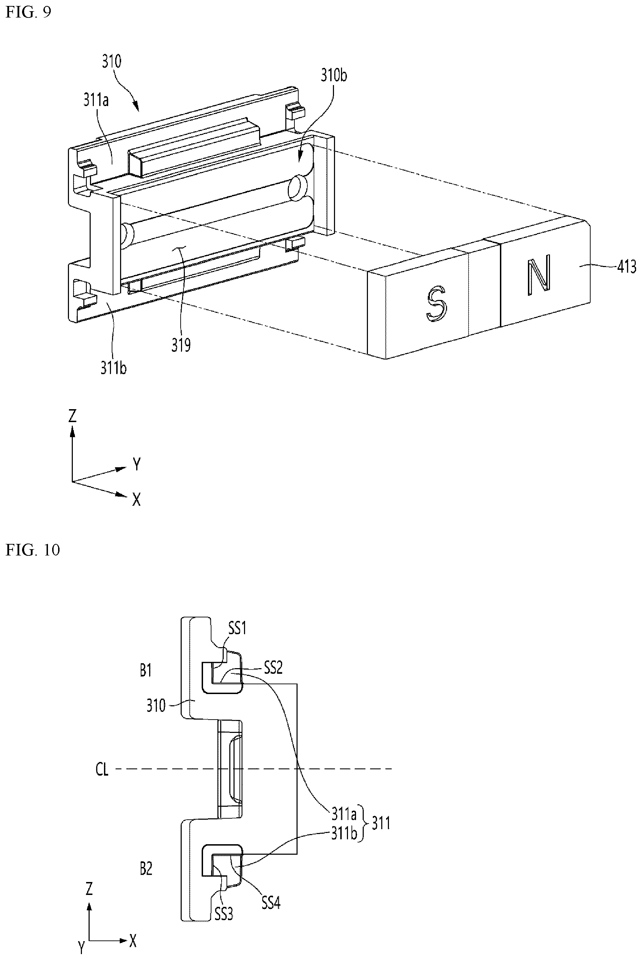

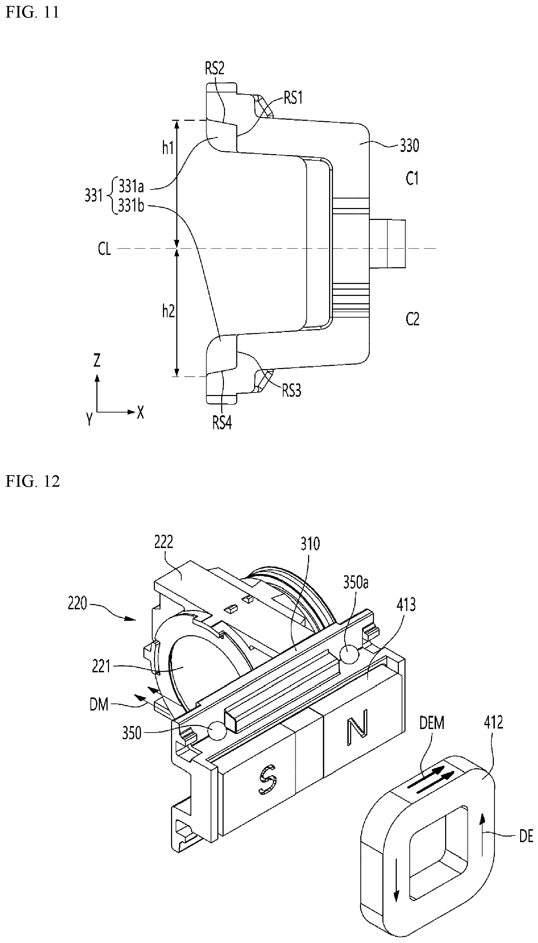

Hereinafter, the magnet holder 310 and the first guide portion will be described in more detail with reference to the drawings. FIG. 10 is a side view of a magnet holder according to an embodiment, and FIG. 11 is a side view of a first guide portion according to an embodiment.

Referring to FIG. 10, the stepped portions 311a and 311b of the magnet holder 310 may include a plurality of stepped surfaces. For example, the first stepped portion 331a may include a first stepped surface SS1 and a second stepped surface SS2. The first stepped surface SS1 may be a surface facing the first guide portion 330 in the first direction (x-axis direction). The first stepped surface SS1 may face the first ball bearing 350a in the first direction. The first stepped surface SS1 may extend in the second and third directions (y-axis and z-axis directions). For example, the first stepped surface SS1 may have a major axis in a second direction (y-axis direction) and a minor axis in the third direction (z-axis direction). The second stepped surface SS2 is a surface extending from an end of the first stepped surface SS1 and may be a surface extending in a direction different from that of the first stepped surface SS1. The second stepped surface SS2 may be a surface facing the first guide portion 330 in the third direction (z-axis direction). The second stepped surface SS2 may face the first ball bearing 350a in the third direction. The second stepped surface SS2 may have a shape extending in the first and second directions (x-axis and y-axis directions). For example, the second stepped surface SS2 may have a major axis in the second direction (y-axis direction) and a minor axis in a first direction (x-axis direction). The first stepped surface SS1 and the second stepped surface SS2 may have a set inclination angle. For example, an angle formed by the first stepped surface SS1 and the second stepped surface SS2 may be a right angle (90 degrees). At least one surface of the first stepped surface SS1 and the second stepped surface SS2 may contact the first ball bearing 350a. In detail, at least one surface of the first stepped surface SS1 and the second stepped surface SS2 may make point contact with the first ball bearing 350a.

The second stepped portion 331b may include a third stepped surface SS3 and a fourth stepped surface SS4. The third stepped surface SS3 may be a surface facing the first guide portion 330 in the first direction (x-axis direction). The third stepped surface SS3 may face the second ball bearing 350b in the first direction. The third stepped surface SS3 may extend in the second and third directions (y-axis and z-axis directions). For example, the third stepped surface SS3 may have a major axis in a second direction (y-axis direction) and a minor axis in a third direction (z-axis direction). The third stepped surface SS3 may be parallel to the first stepped surface SS1. The third stepped surface SS3 may have the same length as the first stepped surface SS1 in the second and third directions (y-axis and z-axis directions). The fourth stepped surface SS4 is a surface extending from an end of the third stepped surface SS3 and may be a surface extending in a direction different from that of the third stepped surface SS3. The fourth stepped surface SS4 may be a surface facing the first guide portion 330 in a third direction (z-axis direction). The fourth stepped surface SS4 may face the second ball bearing 350b in the third direction. The fourth stepped surface SS4 may extend in the first and second directions (x-axis and y-axis directions). For example, the fourth stepped surface SS4 may have a major axis in a second direction (y-axis direction) and a minor axis in a first direction (x-axis direction). The fourth stepped surface SS4 may be parallel to the second stepped surface SS2. The fourth stepped surface SS4 may have the same length as the second stepped surface SS2 in the first and second directions (x-axis and y-axis directions). The third stepped surface SS3 and the fourth stepped surface SS4 may have set inclination angles. An angle formed by the third stepped surface SS3 and the fourth stepped surface SS4 may be the same as an angle formed by the first stepped surface SS1 and the second stepped surface SS2. For example, an angle formed by the third stepped surface SS3 and the fourth stepped surface SS4 may be a right angle (90 degrees). At least one of the third stepped surface SS3 and the fourth stepped surface SS4 may contact the second ball bearing 350b. In detail, at least one surface of the third stepped surface SS3 and the fourth stepped surface SS4 may make point contact with the second ball bearing 350b.

The magnet holder 310 may have a shape in which upper and lower regions are symmetrical to each other with respect to the first direction (x-axis direction). For example, the magnet holder 310 may have a shape in which upper and lower regions are symmetrical to each other with respect to a first virtual straight-line CL passing in the first direction (x-axis direction). Here, the first straight-line CL may be a virtual straight-line passing through the optical axis and the center of the magnet holder 310 in the first direction (x-axis direction). That is, the magnet holder 310 may have a shape in which an upper region B1 and a lower region B2 are symmetrical with respect to the first straight-line CL. Accordingly, the first stepped portion 331a and the second stepped portion 331b may also have a vertically symmetrical shape with respect to the first straight-line CL. For example, the distance from the first straight-line CL to an end of the first stepped surface SS1 based on the third direction (z-axis direction) may be the same as a distance from the first straight-line CL to an end of the third stepped surface SS3. Also, a distance from the first straight-line CL to the second stepped surface SS2 may be equal to a distance from the first straight-line CL to the fourth stepped surface SS4.

Referring to FIG. 11, the rail 331 of the first guide portion 330 may include a plurality of rail surfaces. For example, the first rail 331a may include a first rail surface RS1 and a second rail surface RS2. The first rail surface RS1 may be a surface facing the magnet holder 310 in a first direction (x-axis direction). The first rail surface RS1 may face the first ball bearing 350a in a first direction. The first rail surface RS1 may extend in the second and third directions (y-axis and z-axis directions). For example, the first rail surface RS1 may have a major axis in a second direction (y-axis direction) and a minor axis in a third direction (z-axis direction). The first rail surface RS1 may be parallel to the first stepped surface SS1. The second rail surface RS2 is a surface extending from an end of the first rail surface RS1 and may be a surface extending in a direction different from that of the first rail surface RS1. The second rail surface RS2 may be a surface facing the first guide portion 330 in a third direction (z-axis direction). The second rail surface RS2 may face the first ball bearing 350a in a third direction. The second rail surface RS2 may have a shape extending in the first and second directions (x-axis and y-axis directions). For example, the second stepped surface SS2 may have a major axis in a second direction (y-axis direction) and a minor axis in a first direction (x-axis direction). The first rail surface RS 1 and the second rail surface RS2 may have a set inclination angle. For example, the angle formed by the first rail surface RS 1 and the second rail surface RS2 may be greater than the angle formed by the first stepped surface SS1 and the second stepped surface SS2. In detail, an angle formed by the first rail surface RS1 and the second rail surface RS2 may be greater than about 90 degrees and less than 120 degrees. When the angle formed by the first rail surface RS 1 and the second rail surface RS2 is 90 degrees or less, friction torque of the ball bearing 350a disposed between the first stepped portion 331a and the first rail 331a may increase. As a result, problems such as reduction in driving force, increase in power consumption, and deterioration of control characteristics may occur. In addition, when the angle is 120 degrees or more, when the second lens assembly 220 is moved by the first driving portion 410, a decenter or tilt phenomenon may occur in the second lens assembly 220. As a result, the alignment characteristics of the second lens assembly 220 may be deteriorated, and thus image quality and resolution may be deteriorated. Preferably, the angle formed by the first rail surface RS1 and the second rail surface RS2 may be greater than about 90 degrees and less than about 110 degrees in consideration of driving force and alignment characteristics. At least one surface of the first rail surface RS1 and the second rail surface RS2 may contact the first ball bearing 350a. In detail, at least one surface of the first rail surface RS1 and the second rail surface RS2 may make point contact with the first ball bearing 350a.

The second rail 331b may include a third rail surface RS3 and a fourth rail surface RS4. The third rail surface RS3 may be a surface facing the magnet holder 310 in a first direction (x-axis direction). The third rail surface RS3 may face the second ball bearing 350b in a first direction. The third rail surface RS3 may extend in the second and third directions (y-axis and z-axis directions). For example, the third rail surface RS3 may have a major axis in a second direction (y-axis direction) and a minor axis in a third direction (z-axis direction). The third rail surface RS3 may be parallel to the first rail surface RS1. The third rail surface RS3 may have the same length as the first rail surface RS1 in the second and third directions (y-axis and z-axis directions). The fourth rail surface RS4 is a surface extending from an end of the fourth rail surface RS4 and may be a surface extending in a direction different from that of the third rail surface RS3. The fourth rail surface RS4 may be a surface facing the magnet holder 310 in a third direction (z-axis direction). The fourth rail surface RS4 may face the second ball bearing 350b in a second direction. The fourth rail surface RS4 may have a shape extending in the first and second directions (x-axis and y-axis directions). For example, the fourth rail surface RS4 may have a major axis in a second direction (y-axis direction) and a minor axis in a first direction (x-axis direction). The fourth rail surface RS4 may not be parallel to the second rail surface RS2. The fourth rail surface RS4 may have the same length as the second rail surface RS2 in the first and second directions (x-axis and y-axis directions).

The third rail surface RS3 and the fourth rail surface RS4 may have a set inclination angle. An angle formed by the third rail surface RS3 and the fourth rail surface RS4 may be greater than an angle formed by the third stepped surface SS3 and the fourth stepped surface SS4. Also, an angle formed by the third rail surface RS3 and the fourth rail surface RS4 may be the same as an angle formed by the first rail surface RS 1 and the second rail surface RS2. In detail, an angle formed by the third rail surface RS3 and the fourth rail surface RS4 may be greater than about 90 degrees and less than 120 degrees. When the angle formed by the third rail surface RS3 and the fourth rail surface RS4 is 90 degrees or less, friction torque of the ball bearing 350b disposed between the second stepped portion 331b and the second rail 331b may increase. As a result, problems such as reduction in driving force, increase in power consumption, and deterioration of control characteristics may occur. In addition, when the angle is 120 degrees or more, when the second lens assembly 220 is moved by the first driving portion 410, a decenter or tilt phenomenon may occur in the second lens assembly 220. As a result, the alignment characteristics of the second lens assembly 220 may be deteriorated, and thus image quality and resolution may be deteriorated. Preferably, an angle formed by the third rail surface RS3 and the fourth rail surface RS4 may be greater than about 90 degrees and less than about 110 degrees in consideration of driving force and alignment characteristics. At least one surface of the third rail surface RS3 and the fourth rail surface RS4 may contact the second ball bearing 350b. In detail, at least one surface of the third rail surface RS3 and the fourth rail surface RS4 may make point contact with the second ball bearing 350b.

The first guide portion 330 may have a shape in which upper and lower regions are symmetrical to each other with respect to the first direction (x-axis direction). For example, the first guide portion 330 may have a shape in which upper and lower regions are symmetrical to each other with respect to the first straight-line CL passing in the first direction. Here, the first straight-line CL may be a virtual straight-line passing through the centers of the optical axis, the magnet holder 310 and the first guide portion 330 in a first direction. That is, the first guide portion 330 may have a shape in which an upper region C1 and a lower region C2 are symmetrical with respect to the first straight-line CL. Accordingly, the first rail 331a and the second rail 331b may also have a vertically symmetrical shape with respect to the first straight-line CL. For example, the distance from the first straight-line CL to the end of the first rail surface RS1 based on the third direction (z-axis direction) may be equal to a distance from the first straight-line CL to an end of the third rail surface RS3. Further, the distance h1 from the first straight-line CL to the second rail surface RS2 may be equal to the distance h2 from the first straight-line CL to the fourth rail surface RS4. In this case, the first stepped surface SS1 and the first rail surface RS1 may be spaced apart in the first direction (x-axis direction), and the second stepped surface SS2 and the second rail surface RS2 may be spaced apart in the third direction (z-axis direction). In addition, the third stepped surface SS3 and the third rail surface RS3 may be spaced apart from each other in the first direction (x-axis direction), and the fourth stepped surface SS4 and the fourth rail surface RS4 may be spaced apart in the fourth direction (z-axis direction). A distance between the first stepped surface SS 1 and the first rail surface RS 1 in a first direction may be the same as a distance between the third stepped surface SS3 and the third rail surface RS3 in a first direction. In addition, the distance between the second stepped surface SS2 and the second rail surface RS2 in the third direction may be the same as the distance between the fourth stepped surface SS4 and the fourth rail surface RS4 in the third direction.

Alternatively, the first guide portion 330 may have an asymmetrical shape. For example, the upper region C1 and the lower region C2 of the first guide portion 330 may be asymmetrically disposed with respect to the first straight-line CL. In detail, the first rail 331a and the second rail 331b may have the same cross-sectional shape. In addition, an angle formed by the first rail surface RS1 and the second rail surface RS2 may be the same as an angle formed by the third rail surface RS3 and the fourth rail surface RS4, and lengths of each of the rail surfaces RS1, RS2, RS3, and RS4 in the first to third directions (x, y, and z-axis directions) may be the same. However, the first guide portion 330 may have an asymmetrical shape up and down (in the z-axis direction) with respect to the first straight-line CL. For example, based on the third direction (z-axis direction), the distance h2 from the first straight-line CL to the fourth rail surface RS4 may be different from a distance h1 from the first straight-line CL to the second rail surface RS2. In detail, based on the third direction (z-axis direction), the distance h2 from the first straight-line CL to the fourth rail surface RS4 may be longer than the distance h1 from the first straight-line CL to the second rail surface RS2. Accordingly, the first guide portion 330 may have an asymmetrical shape up and down (in the z-axis direction) with respect to the first straight-line CL. In this case, the first stepped surface SS 1 and the first rail surface RS 1 may be spaced apart in a first direction (x-axis direction), and the second stepped surface SS2 and the second rail surface RS2 may be spaced apart in the third direction (z-axis direction). In addition, the third stepped surface SS3 and the third rail surface RS3 may be spaced apart from each other in a first direction (x-axis direction), and the fourth stepped surface SS4 and the fourth rail surface RS4 may be spaced apart in the fourth direction (z-axis direction).

A distance between the first stepped surface SS1 and the first rail surface RS1 in a first direction may be the same as a distance between the third stepped surface SS3 and the third rail surface RS3 in a first direction. Further, a distance in the third direction between the second stepped surface SS2 and the second rail surface RS2 may be different from a distance between the fourth stepped surface SS4 and the fourth rail surface RS4 in the third direction. In detail, the distance between the fourth stepped surface SS4 and the fourth rail surface RS4 in the third direction may be longer than the distance between the second stepped surface SS2 and the fourth rail surface RS4 in the third direction. That is, as the first guide portion 330 has an asymmetrical shape, the aforementioned distance difference in the third direction may occur.

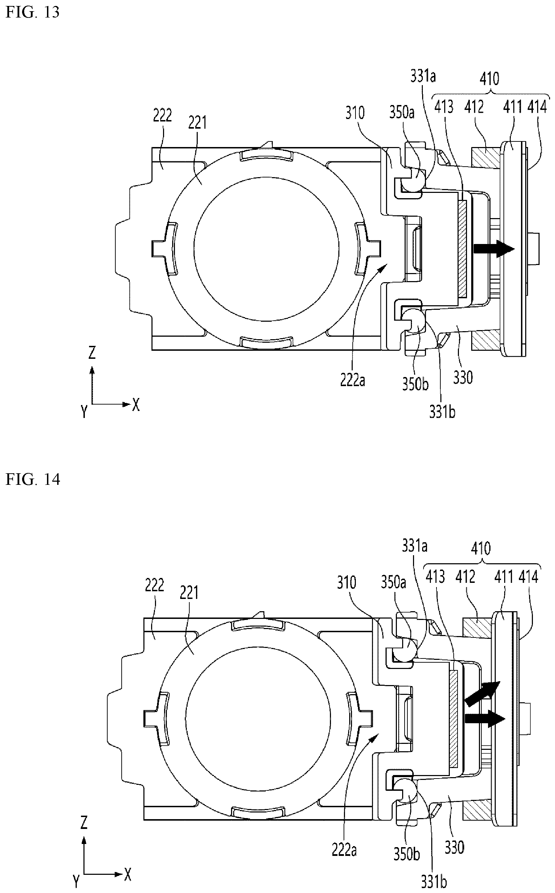

FIG. 12 is a diagram illustrating driving in a first camera actuator according to an embodiment, and FIGS. 13 and 14 are diagrams for explaining the attraction generated by the driving portion.

Referring to FIG. 12, the magnetization method of the magnet 413 in the first driving portion 410 may be a perpendicular magnetization method. For example, both the N pole and the S pole of the magnet 413 may be disposed to face the coil 412. Accordingly, the N pole and the S pole of the magnet 413 may be respectively disposed to correspond to a region in which the current flows in the third direction (z-axis direction) perpendicular to the ground in the coil 412. Here, when the magnetic force DM is applied in the opposite direction to the first direction (x-axis direction) in the N pole of the first driving portion 410 (the direction of the magnetic force may be a positive direction or a negative direction of the illustrated direction ) and the current DE flows in the third direction (z-axis direction) in the coil 412 region corresponding to the N pole, the electromagnetic force DEM may be applied in the second direction (y-axis direction) according to Fleming's left-hand rule.

When magnetic force DM is applied in a first direction (x-axis direction) in the S pole of the first driving portion 410, and current DE flows in the third direction (z-axis direction) perpendicular to the ground in the coil 412 corresponding to the S pole, the electromagnetic force DEM may act in the second direction (y-axis direction) according to Fleming's left-hand rule. At this time, since the coil 412 is in a fixed state in the first driving portion 410, the magnet holder 310 on which the magnet 413 is disposed and the second lens assembly 220 coupled to the magnet holder 310 may move back and forth along the rail of the first guide portion 330 in the optical axis direction (y-axis direction, second direction) by the electromagnetic force DEM according to the current direction. Here, the electromagnetic force DEM may be controlled in proportion to the current DE applied to the coil 412. Accordingly, the first camera actuator 1000 may prevent or minimize the occurrence of a decenter or tilt phenomenon of a lens during an autofocusing (AF) operation. Therefore, according to the embodiment, an align characteristic between lenses may be improved to prevent a change in angle of view or occurrence of out-of-focus, and thus, improved image quality and resolving power may be obtained.

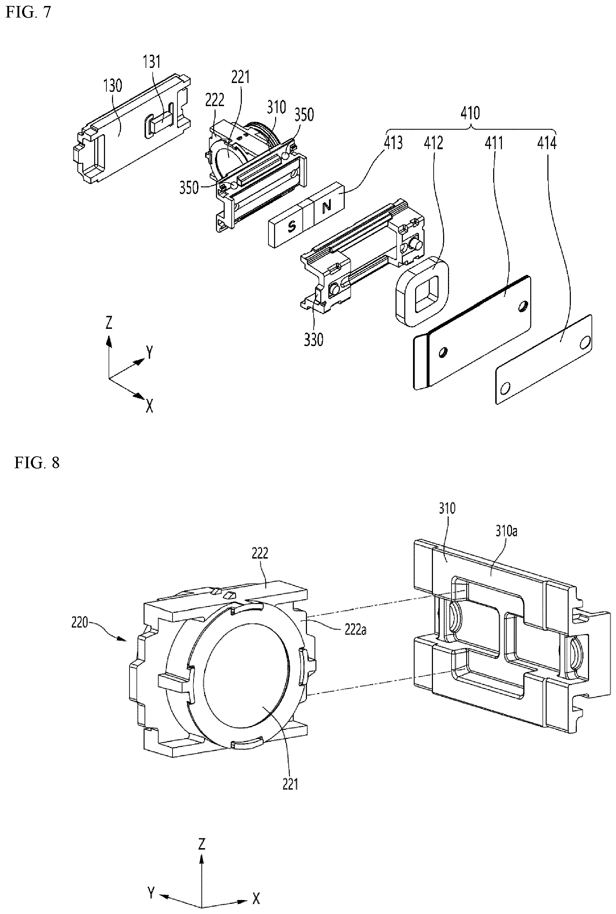

Referring to FIGS. 7, 11 and 13, the first driving portion 410 may be disposed at a set position to support the second lens assembly 220. In detail, each of the coil 412, magnet 413, and yoke 414 of the first driving portion 410 may be disposed at a set position. The coil 412 may be disposed in a region corresponding to the second lens assembly 220 and the first guide portion 330. For example, the center of the coil 412 may be disposed in a region corresponding to the center of the second lens assembly 220 and the center of the first guide portion 330. In detail, the center of the coil 412, the center of the second lens assembly 220, and the center of the first guide portion 330 may be disposed on the same plane as the virtual first plane extending in first and second directions (x-axis and y-axis directions) from the optical axis. The magnet 413 may be disposed in a region corresponding to the coil 412 on the other side 310b of the magnet holder 310. The magnet 413 may be disposed in a region overlapping the coil 412 in the first direction (x-axis direction). Also, the magnet 413 may be disposed in a region corresponding to the second lens assembly 220 and the first guide portion 330. For example, the center of the magnet 413 may be disposed in a region corresponding to the center of the second lens assembly 220 and the center of the first guide portion 330. In detail, the center of the magnet 413 may be disposed on the same plane as the first plane. That is, the center of the coil 412, the center of the magnet 413, the center of the second lens assembly 220, and the center of the first guide portion 330 may be disposed on the same plane.

The yoke 414 may be disposed in a region corresponding to the coil 412 and the magnet 413. For example, the yoke 414 may be disposed in a region overlapping the coil 412 and the magnet 413 in the first direction (x-axis direction). Also, the yoke 414 may be disposed in a region corresponding to the second lens assembly 220 and the first guide portion 330. For example, the center of the yoke 414 may be disposed in a region corresponding to the center of the second lens assembly 220 and the center of the first guide portion 330. In detail, the center of the yoke 414 may be disposed on the same plane as the first plane. That is, the center of the yoke 414, the center of the coil 412, the center of the magnet 413, the center of the second lens assembly 220, and the center of the first guide portion 330 may be disposed on the same plane as each other. That is, as described above, the upper and lower regions C1 and C2 of the first guide portion 330 may have symmetrical shapes with respect to the first straight-line CL. In this case, the center of the yoke 414 may be disposed on the same plane as the centers of the magnet 413 and the coil 412. Accordingly, horizontal attraction may occur between the magnet 413 and the yoke 414 as shown in FIG. 13. In this case, the first ball bearing 350a disposed on the upper portion may come into contact with the magnet holder 310 and the first guide portion 330. For example, the first ball bearing 350a may be disposed in point contact with the first stepped surface SS1, the second stepped surface SS2, the first rail surface RS1 and the second rail surface RS2. That is, the first ball bearing 350a may be disposed in four-point contact.

The second ball bearing 350b disposed at a lower portion may come into contact with the magnet holder 310 and the first guide portion 330. For example, the second ball bearing 350b may be disposed in a point contact with the third stepped surface SS3, the fourth stepped surface SS4, the third rail surface RS3, and the fourth rail surface RS4. That is, the second ball bearing 350b may be disposed in four-point contact. Accordingly, the first camera actuator 1000 according to the embodiment may have improved optical characteristics. In detail, the first camera actuator 1000 may effectively control the alignment characteristics of the second lens assembly 220 and the distance from other lens assemblies by the first guide portion 330. Accordingly, the first camera actuator 1000 may have improved image quality and resolution.

Differently, referring to FIGS. 7, 11 and 14, as described above, the upper and lower regions C1 and C2 of the first guide portion 330 may have an asymmetrical shape to each other with respect to the first straight-line CL. In this case, the center of the yoke 414 may not be disposed on the same plane as the center of the magnet 413 and the coil 412. In detail, referring to FIG. 14, the center of the yoke 414 may be disposed above the first plane passing through the optical axis, the center of the coil 412, and the center of the magnet 413 (based on the z-axis direction). That is, based on the third direction (z-axis direction), the center of the yoke 414 may be disposed above the center of the magnet 413. The center of the yoke 414 may be disposed at a position higher than the center of the coil 412 and the center of the magnet 413 by about 10% to about 30% of the length of the yoke 414 in the third direction (z-axis direction). Accordingly, horizontal attraction and vertical attraction may occur simultaneously between the magnet 413 and the yoke 414. In this case, the first ball bearing 350a disposed on the upper portion may come into contact with the magnet holder 310 and the first guide portion 330. For example, the first ball bearing 350a may be disposed on a point contact with the first stepped surface SS1, the second stepped surface SS2, the first rail surface RS1 and the second rail surface RS2. That is, the first ball bearing 350a may be disposed in four-point contact.

The second ball bearing 350b disposed at a lower portion may come into contact with the magnet holder 310 and the first guide portion 330. For example, when no driving force is applied to the first driving portion 410, the second ball bearing 350b may make point contact with the third stepped surface SS3 and the third rail surface RS3 and may be spaced apart from the fourth stepped surface SS4 and the fourth rail surface RS4. That is, an air gap may be formed between the second ball bearing 350b and the fourth stepped surface SS4 and between the second ball bearing 350b and the fourth rail surface RS4. The second ball bearing 350b may be disposed in contact with two points. Accordingly, the first camera actuator 1000 according to the embodiment may have improved optical characteristics. In detail, the first camera actuator 1000 may effectively control the alignment characteristics of the second lens assembly 220 and the distance from other lens assemblies by the first guide portion 330. Accordingly, the first camera actuator 1000 may have improved image quality and resolution. In the first camera actuator 1000, the center of the yoke 414 may be positioned higher than the center of the coil 412 and the center of the magnet. For this reason, the first guide portion 330 may have an asymmetrical shape, and the number of contact points between the magnet holder 310 and the first guide portion 330 contacting the ball bearing 350 may be reduced. For example, the first ball bearing 350a may have a four-point contact, and the second ball bearing 350b may have a two-point contact. Accordingly, the degree of freedom regarding the size and shape of the rail of the first guide portion 330 may be improved. In particular, since the number of contact surfaces in contact with the ball bearing 350 may be reduced, the dimensional distribution of the first guide portion 330 may be reduced and manufacturing defects of the first camera actuator 1000 may be prevented.

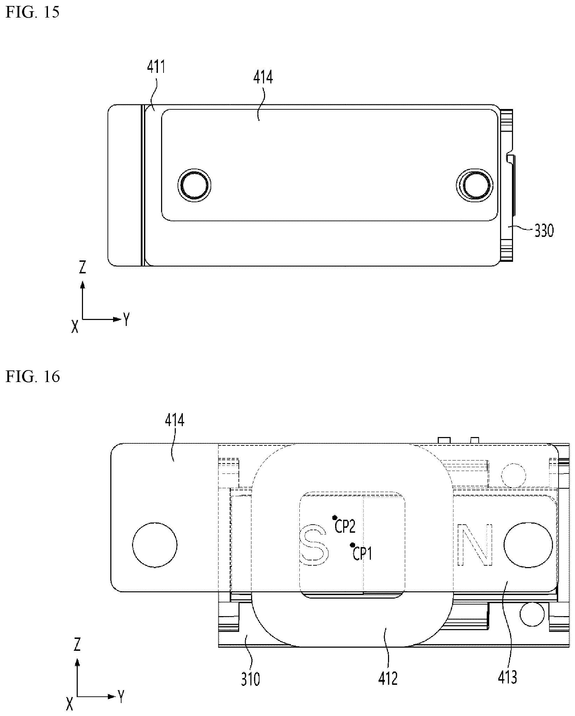

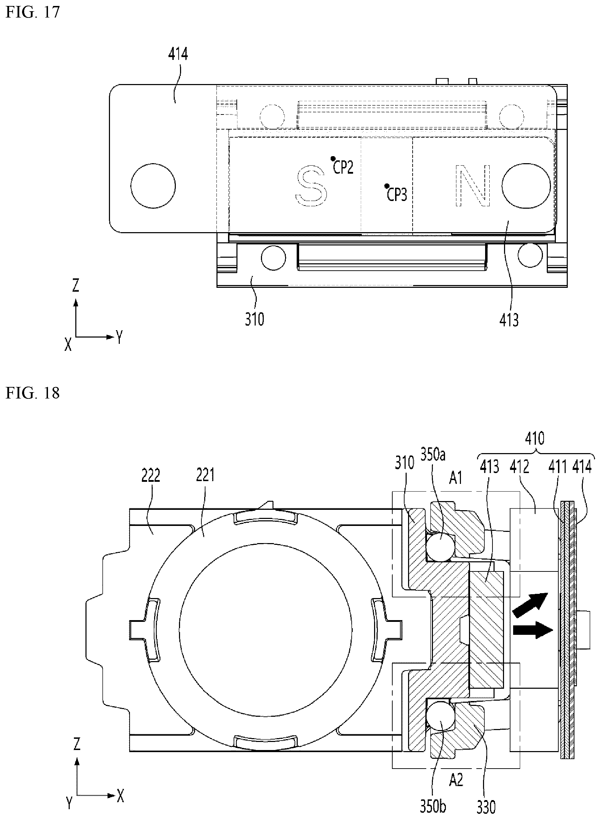

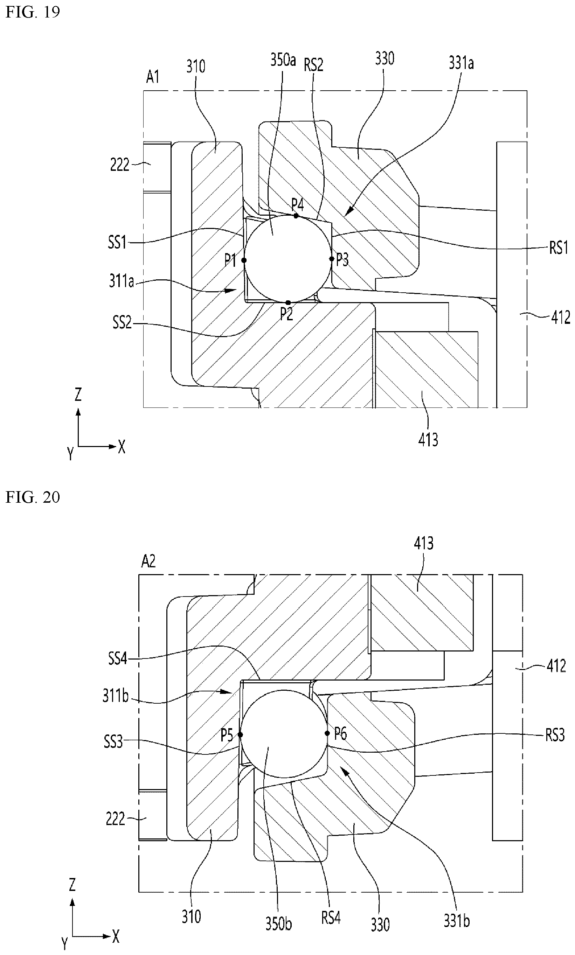

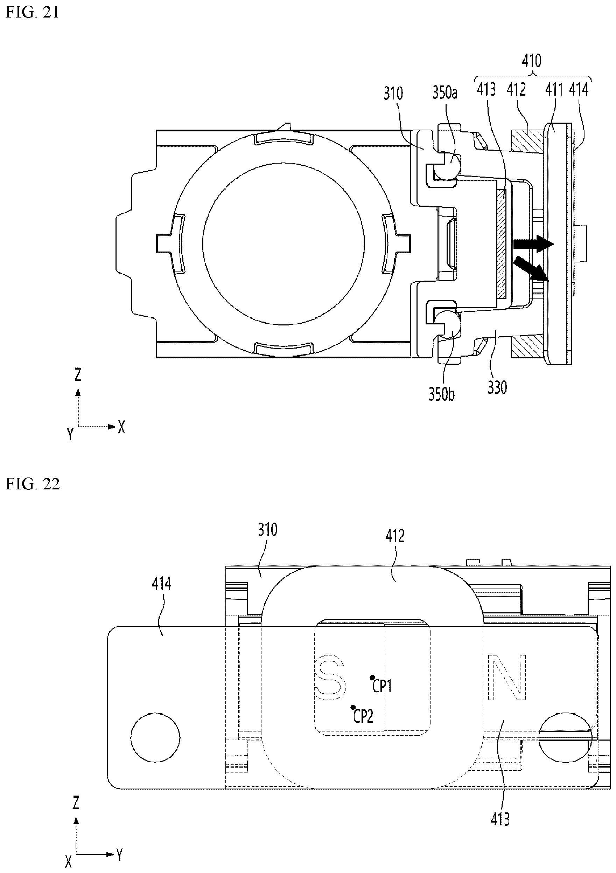

FIG. 15 is an exemplary view of driving a first camera actuator according to an embodiment, FIG. 16 is a front view in which some components are omitted from the first camera actuator of FIG. 3, and FIGS. 17 to 19 are a first camera actuator according to an embodiment. FIGS. 20 and 21 are views for explaining the arrangement relationship of ball bearings in the first camera actuator according to the embodiment.

Referring to FIG. 15, the magnetization method of the magnet 413 in the first driving portion 410 may be a perpendicular magnetization method. For example, both the N pole and the S pole of the magnet 413 may be disposed to face the coil 412. Accordingly, the N pole and the S pole of the magnet 413 may be respectively disposed to correspond to a region in which the current flows in the third direction (z-axis direction) perpendicular to the ground in the coil 412. Here, when the magnetic force DM is applied in the opposite direction to the first direction (x-axis direction) from the N pole of the first driving portion 410 (the direction of the magnetic force may be a positive direction or a negative direction of the illustrated direction), and the current DE flows in the third direction (z-axis direction) in a region of the coil 412 corresponding to the N pole, the electromagnetic force DEM may act in the second direction (y-axis direction) according to Fleming's left-hand rule. When magnetic force DM is applied in a first direction (x-axis direction) from the S pole of the first driving portion 410, and the current DE flows in the third direction (z-axis direction) perpendicular to the ground in a region of the coil 412 corresponding to the S pole, the electromagnetic force DEM may act in the second direction (y-axis direction) according to Fleming's left-hand rule. Since the coil 412 is in a fixed state in the first driving portion 410, the magnet holder 310 on which the magnet 413 is disposed and the second lens assembly 220 coupled to the magnet holder 310 may move back and forth along the rail of the first guide portion 330 in the optical axis direction (y-axis direction, second direction) by the electromagnetic force DEM according to the current direction. Here, the electromagnetic force DEM may be controlled in proportion to the current DE applied to the coil 412. Accordingly, the first camera actuator 1000 may prevent or minimize the occurrence of a decenter or tilt phenomenon of a lens during an autofocusing (AF) operation. Therefore, according to the embodiment, an align characteristic between lenses may be improved to prevent a change in angle of view or occurrence of out-of-focus, and thus, improved image quality and resolving power may be obtained.

Referring to FIGS. 15 to 18, the first driving portion 410 may be disposed at a set position. In detail, each of the coil 412, magnet 413, and yoke 414 of the first driving portion 410 may be disposed at a set position. The coil 412 may be disposed in a region corresponding to the second lens assembly 220 and the first guide portion 330. For example, the center CP1 of the coil 412 may be disposed in a region corresponding to the center of the second lens assembly 220 and the center of the first guide portion 330. In detail, the center CP1 of the coil 412, the center of the second lens assembly 220, and the center of the first guide portion 330 may be disposed on the same plane as the virtual first plane extending toward the first and second directions (x-axis, y-axis directions) from the optical axis. The magnet 413 may be disposed in a region corresponding to the coil 412. The magnet 413 may be disposed in a region overlapping the coil 412 in the first direction (x-axis direction). Also, the magnet 413 may be disposed in a region corresponding to the second lens assembly 220 and the first guide portion 330. For example, the center CP3 of the magnet 413 may be disposed in a region corresponding to the center of the second lens assembly 220 and the center of the first guide portion 330. In detail, the center CP3 of the magnet 413 may be disposed on the same plane as the first plane. That is, the center CP1 of the coil 412, the center CP3 of the magnet 413, the center of the second lens assembly 220, and the center of the first guide portion 330 may be disposed on the same plane from each other.

The yoke 414 may be disposed in a region corresponding to the coil 412 and the magnet 413. For example, the yoke 414 may be disposed in a region overlapping the coil 412 and the magnet 413 in a first direction (x-axis direction). Also, based on the first direction (x-axis direction), the yoke 414 may be disposed in a region overlapping with the first ball bearing 350a and may not overlap with the second ball bearing 350b. The center CP2 of the yoke 414 may be disposed in a region that does not correspond to the center of the second lens assembly 220 and the center of the first guide portion 330. In detail, the center CP2 of the yoke 414 may be disposed at a position higher than the first plane passing through the optical axis, the center CP1 of the coil 412, and the center CP3 of the magnet 413 (based on the z-axis direction). That is, based on the third direction (z-axis direction), the center CP2 of the yoke 414 may be disposed at a higher position than the center CP1 of the coil 412 and the center CP3 of the magnet 413. The center CP3 of the yoke 414 may be disposed at a position higher than the center CP1 of the coil 412 and the center CP3 of the magnet 413 by about 10% to about 30% of the length of the yoke 414 in the third direction (z-axis direction).

When the center CP3 of the yoke 414 is located at an upper portion of less than about 10%, a magnitude of attraction in a vertical direction (z-axis direction) generated between the magnet 413 and the yoke 414 may be small. Accordingly, an effect of reducing the number of regions in which the second ball bearing 350b makes point contact may be insignificant. In addition, when the center CP3 of the yoke 414 is located at an upper portion exceeding about 30%, the magnitude of the vertical force generated between the magnet 413 and the yoke 414 may increase excessively, the magnitude of the attraction force in the horizontal direction (x-axis direction) may decrease. Accordingly, the driving frictional force of the ball bearing 350 disposed between the first rail 331a and the second rail 331b may increase, and the alignment characteristics of the second lens assembly may deteriorate. Preferably, the center CP3 of the yoke 414 may be located at an upper portion by 15% to about 25% in consideration of the reduction in the number of contact points of the ball bearing 350, control of generated force, alignment characteristics, and the like.

In the first camera actuator 1000 according to the embodiment, the center CP2 of the yoke 414 may be disposed at a position higher than the center CP1 of the coil 412 and the center CP2 of the magnet 413. Accordingly, horizontal and vertical attraction may occur between the magnet 413 and the yoke 414. In this case, the first ball bearing 350a disposed on the upper portion may come into contact with the magnet holder 310 and the first guide portion 330. For example, as shown in FIG. 19, the first ball bearing 350a may be disposed in a point contact with the first stepped surface SS1, the second stepped surface SS2, the first rail surface RS1, and the second rail surface RS2. The first ball bearing 350a may be disposed in contact with four points P1, P2, P3, and P4.

The second ball bearing 350b disposed at a lower portion may come into contact with the magnet holder 310 and the first guide portion 330. For example, when no driving force is applied to the first driving portion 410, the second ball bearing 350b may make point contact with the third stepped surface SS3 and the third rail surface RS3 and may be spaced apart from the fourth stepped surface SS4 and the fourth rail surface RS4 as shown in FIG 20. That is, an air gap may be formed between the second ball bearing 350b and the fourth stepped surface SS4 and between the second ball bearing 350b and the fourth rail surface RS4. The second ball bearing 350b may be disposed in contact with two points P5 and P6.

When a driving force is applied to the first driving portion 410, the second ball bearing 350b may make point contact with at least two surfaces of the third stepped surface SS3, the fourth stepped surface SS4, the third rail surface RS3 and the fourth rail surface RS4. When a driving force is applied, the second ball bearing 350b may be disposed in contact with the magnet holder 310 and the first guide portion 330 at least two-points, for example, in contact with two to four points. Accordingly, the first camera actuator 1000 according to the embodiment may have improved optical characteristics. In detail, the first camera actuator 1000 may effectively control the alignment characteristics of the second lens assembly 220 and the distance from other lens assemblies by the first guide portion 330. Accordingly, the first camera actuator 1000 may have improved image quality and resolution.

In the first camera actuator 1000, the center CP3 of the yoke 414 may be located higher than the center CP1 of the coil 412 and the center CP3 of the magnet 413. For this reason, the first guide portion 330 may have an asymmetrical shape, and the number of contact points between the magnet holder 310 and the first guide portion 330 contacting the ball bearing 350 may be reduced. For example, the first ball bearing 350a may contact four points P1, P2, P3, and P4, and the second ball bearing 350b may contact two points P5 and P6. Accordingly, the degree of freedom regarding the size and shape of the rail of the first guide portion 330 can be improved. In particular, since the number of contact surfaces in contact with the ball bearing 350 may be reduced, dispersion of the first guide portion 330 may be reduced and manufacturing defects of the first camera actuator 1000 may be prevented.

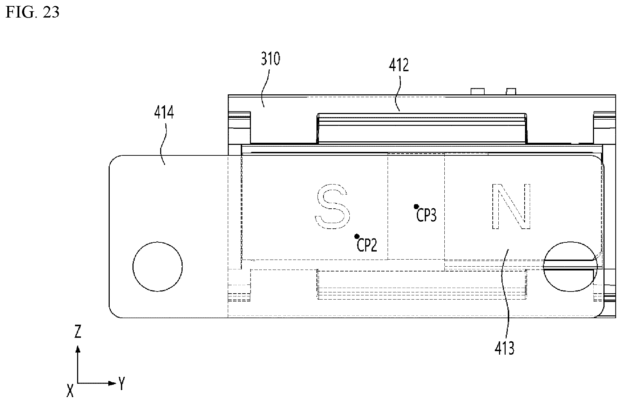

FIGS. 21 to 23 are diagrams for explaining other arrangement relationships of the first driving portion in the first camera actuator according to the exemplary embodiment. In the description using FIGS. 21 to 23, descriptions of components identical to and similar to those of the first camera actuator described above are omitted, and identical reference numerals are given to components similar to those of the first camera actuator described above.

Referring to FIGS. 21 to 23, the first driving portion 410 may be disposed at a set position. In detail, each of the coil 412, magnet 413, and yoke 414 of the first driving portion 410 may be disposed at a set position. The coil 412 may be disposed in a region corresponding to the second lens assembly 220 and the first guide portion 330. For example, the center CP1 of the coil 412 may be disposed in a region corresponding to the center of the second lens assembly 220 and the center of the first guide portion 330. In detail, the center CP1 of the coil 412, the center of the second lens assembly 220, and the center of the first guide portion 330 may be disposed on the same plane as the virtual first plane extending toward the first and second directions (x-axis, y-axis directions) from the optical axis. The magnet 413 may be disposed in a region corresponding to the coil 412. The magnet 413 may be disposed in a region overlapping the coil 412 in a first direction (x-axis direction). Also, the magnet 413 may be disposed in a region corresponding to the second lens assembly 220 and the first guide portion 330. For example, the center CP3 of the magnet 413 may be disposed in a region corresponding to the center of the second lens assembly 220 and the center of the first guide portion 330. In detail, the center CP3 of the magnet 413 may be disposed on the same plane as the first plane. That is, the center CP1 of the coil 412, the center CP3 of the magnet 413, the center of the second lens assembly 220, and the center of the first guide portion 330 may be disposed on the same plane with each other.

The yoke 414 may be disposed in a region corresponding to the coil 412 and the magnet 413. For example, the yoke 414 may be disposed in a region overlapping the coil 412 and the magnet 413 in a first direction (x-axis direction). In addition, based on the first direction (x-axis direction), the yoke 414 may be disposed in a region overlapping with the second ball bearing 350b and may not overlap with the first ball bearing 350a. The center CP2 of the yoke 414 may be disposed in a region that does not correspond to the center of the second lens assembly 220 and the center of the first guide portion 330. In detail, the center CP2 of the yoke 414 may be disposed at a position lower (based on the z-axis direction) than the first plane passing through the optical axis, the center CP1 of the yoke 414, and the center CP3 of the magnet 413. That is, based on the third direction (z-axis direction), the center CP2 of the yoke 414 may be disposed at a position lower than the center CP1 of the coil 412 and the center CP3 of the magnet 413. The center CP3 of the yoke 414 may be lower than the center CP1 of the coil 412 and the center CP3 of the magnet 413 by about 10% to about 30% of a length of the yoke 414 in the third direction (z-axis direction).

When the center CP3 of the yoke 414 is disposed below about 10%, the magnitude of the vertical direction (z-axis direction) attraction generated between the magnet 413 and the yoke 414 may be small. Accordingly, an effect of reducing the number of regions in which the second ball bearing 350b makes point contact may be insignificant. In addition, when the center CP3 of the yoke 414 is located at a lower portion exceeding about 30%, the magnitude of the vertical force generated between the magnet 413 and the yoke 414 may increase excessively, the magnitude of the attraction force in the horizontal direction (x-axis direction) may decrease. Accordingly, the driving frictional force of the ball bearing 350 disposed between the first rail 331a and the second rail 331b may increase, and the alignment characteristics of the second lens assembly may deteriorate. Preferably, the center CP3 of the yoke 414 may be disposed at an upper portion by 15% to about 25% in consideration of the reduction in the number of contact points of the ball bearing 350, control of generated force, alignment characteristics, and the like.

In the first camera actuator 1000 according to the embodiment, the center CP2 of the yoke 414 may be disposed lower than the center CP1 of the coil 412 and the center CP2 of the magnet 413. Accordingly, horizontal and vertical attraction may occur between the magnet 413 and the yoke 414. In this case, the second ball bearing 350b disposed at the lower portion may come into contact with the magnet holder 310 and the first guide portion 330. For example, the second ball bearing 350b may be a point contact with the third stepped surface SS3, the fourth stepped surface SS4, the third rail surface RS3, and the fourth rail surface RS4. The second ball bearing 350b may be disposed in four-point contact.

The first ball bearing 350a disposed on the upper portion may come into contact with the magnet holder 310 and the first guide portion 330. For example, when driving force is not applied to the first driving portion 410, the first ball bearing 350a may make point contact with the first stepped surface SS1 and the first rail surface RS 1 and may be spaced apart from the second stepped surface SS2 and the second rail surface RS2. That is, an air gap may be formed between the first ball bearing 350a and the second stepped surface SS2 and between the first ball bearing 350a and the second rail surface RS2. The first ball bearing 350a may be disposed in contact with two points. When a driving force is applied to the first driving portion 410, the first ball bearing 350a may make point contact with at least two surfaces of the first stepped surface SS1, the second stepped surface SS2, the first rail surface RS1, and the second rail surface RS2. When a driving force is applied, the first ball bearing 350a may be in contact with the magnet holder 310 and the first guide portion 330 at least two points, for example, two to four points.

In the first camera actuator 1000, the center CP3 of the yoke 414 may be located lower than the center CP1 of the coil 412 and the center CP3 of the magnet 413. For this reason, the first guide portion 330 may have an asymmetrical shape, and the number of contact points between the magnet holder 310 and the first guide portion 330 contacting the ball bearing 350 may be reduced. For example, the second ball bearing 350b may have four-point contact, and the first ball bearing 350a may have two-point contact. Accordingly, the degree of freedom regarding the size and shape of the rail of the first guide portion 330 may be improved. In particular, since the number of contact surfaces in contact with the ball bearing 350 may be reduced, dispersion of the first guide portion 330 may be reduced and manufacturing defects of the first camera actuator 1000 may be prevented.

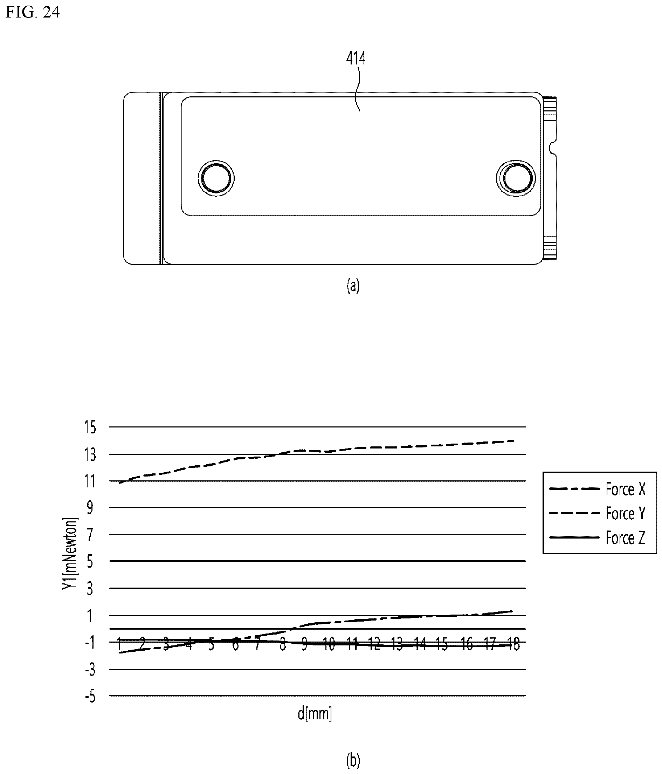

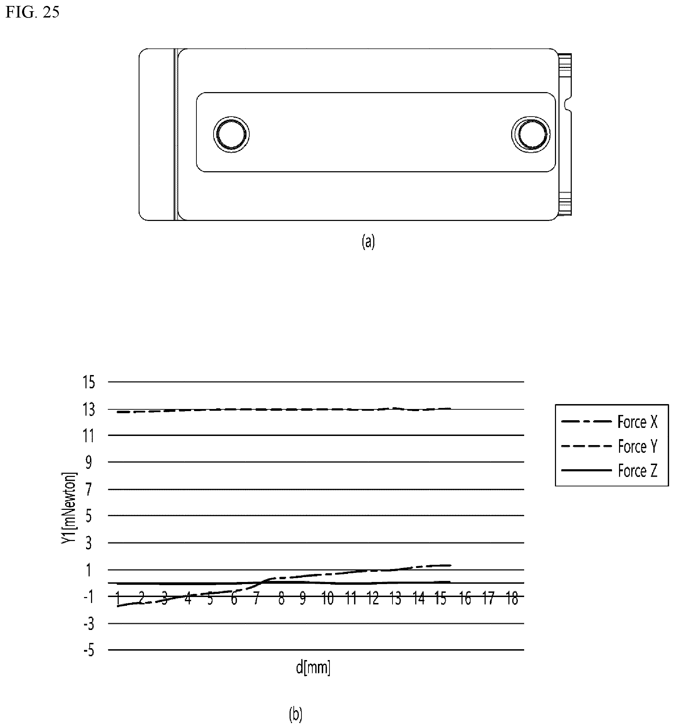

FIGS. 24 and 25 are views for explaining a first camera actuator according to an embodiment and a comparative example. In the graphs of FIGS. 24(b) and 25(b), the X axis means the moving distance (d, mm) of the second lens assembly 220, and the Y-axis means the force (mN/mA) per unit current. The actions and effects of the invention will be described in more detail through the embodiment and comparative examples below.

In the embodiment, the first driving portion 410 including the coil 412, the magnet 413, and the yoke 414 is disposed at a set position. In detail, the coil 412, the magnet 413, and the yoke 414 are arranged to overlap each other in a first direction (x-axis direction). At this time, the length of the yoke 414 in the third direction (z-axis direction) is formed to be about 25% or more longer than the length of the yoke 414 in the third direction of the comparative example to be described later, so that the center of the yoke 414 is formed to be disposed at a position higher than the center of the coil 412 and the center of the magnet 413. Then, the attractive force generated between the magnet 413 and the yoke 414 was measured.

In the comparative example, the first driving portion 410 including the coil 412, the magnet 413, and the yoke 414 is disposed at a set position. In detail, the coil 412, the magnet 413, and the yoke 414 are arranged to overlap each other in the first direction (x-axis direction). At this time, the center of the yoke 414 is formed to be disposed on the same plane as the center of the coil 412 and the center of the magnet 413. Then, the attractive force generated between the magnet 413 and the yoke 414 was measured.

Referring to FIGS. 24 and 25, it may be seen that an attractive force is generated between the magnet 413 and the yoke 414 in the first driving portion 410 according to the embodiment and comparative example. In detail, it can be seen that in the first driving portion 410 according to the comparative example, an attractive force is generated between the magnet 413 and the yoke 414 in the first direction (x-axis direction). On the other hand, in the first driving portion 410 according to the embodiment, it may be seen that attraction is generated between the magnet 413 and the yoke 414 in the third direction (z-axis direction) as well as in the first direction (x-axis direction). That is, it may be seen that attraction is generated in the horizontal direction in the case of the comparative example, whereas attraction is generated in the horizontal and vertical directions in the case of the embodiment. Accordingly, the embodiment may effectively move the second lens assembly 220 with the applied driving force, and the number of contacts of the ball bearing 350 in contact with the magnet holder 310 and the first guide portion 330 may be reduced. Accordingly, the degree of freedom regarding the size and shape of the rail of the first guide portion 330 may be improved, and dispersion of the first guide portion 330 may be reduced, thereby preventing overall manufacturing defects.

Hereinafter, the magnet holder 310 and the second lens assembly 220 will be described in more detail with reference to the accompanying drawings.

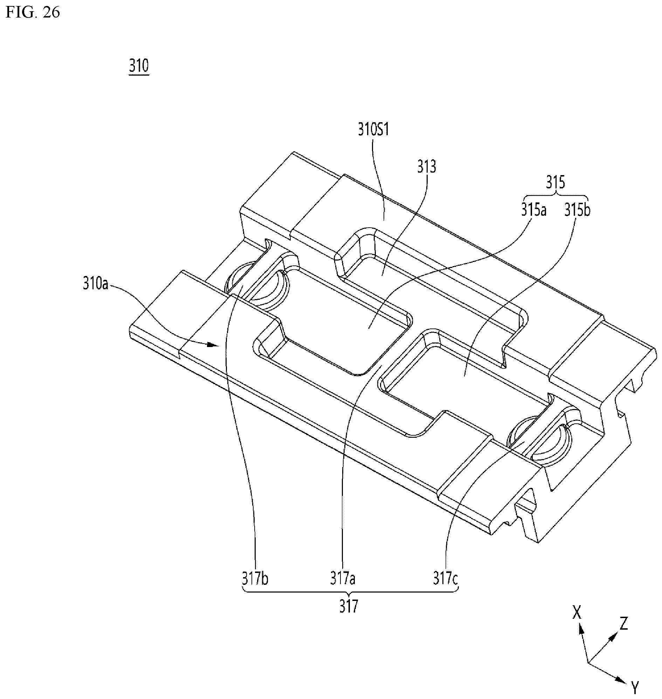

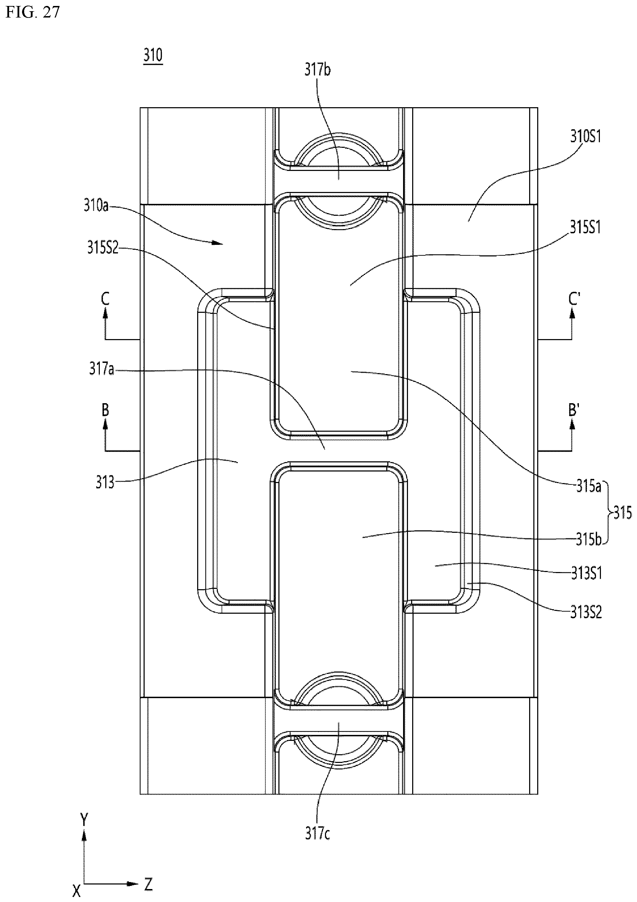

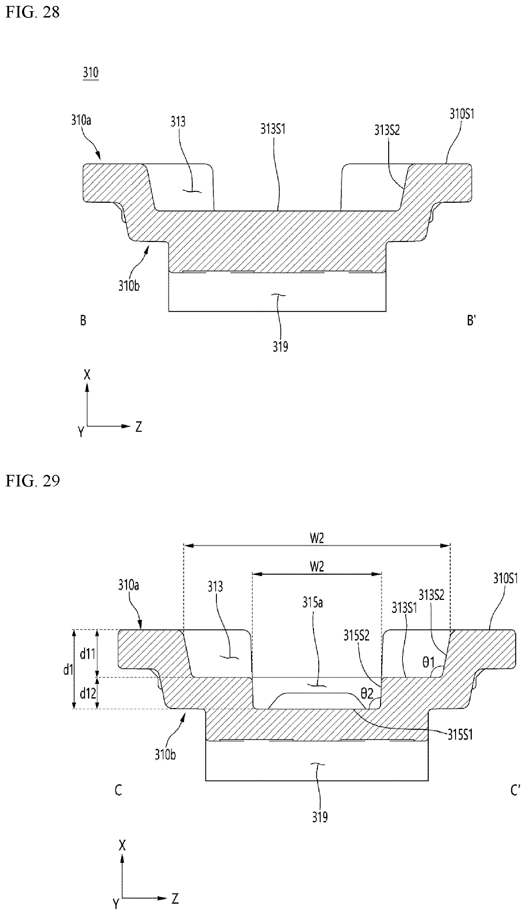

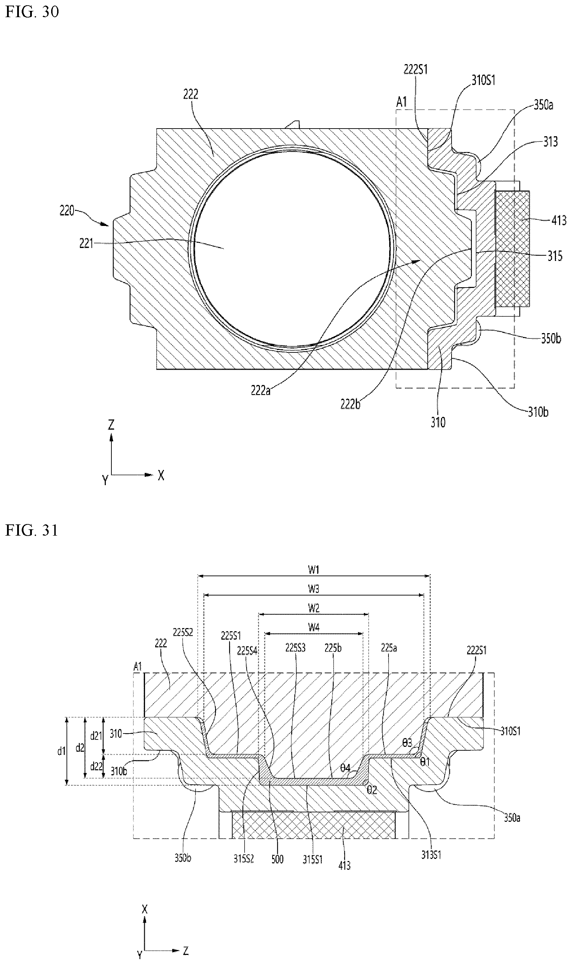

FIG. 26 is a perspective view of a magnet holder according to an embodiment, FIG. 27 is a top view of a magnet holder according to an embodiment, FIG. 28 is a cross-sectional view taken along line B-B' of FIG. 27, FIG. 29 is a cross-sectional view taken along line C-C' of FIG. 27, FIG. 30 is a cross-sectional view illustrating a coupling relationship between a second lens assembly and a magnet holder according to an embodiment, and FIG. 31 is an enlarged view of region A1 of FIG. 30.

Referring to FIGS. 26 to 31, the magnet holder 310 may include at least one concave portion. In detail, the magnet holder 310 may include a plurality of concave portions disposed on one side surface 310S1 facing the one side 222a of the second lens assembly 220. The plurality of concave portions may have a concave shape in a direction from one side surface 310S1 to the other side 310b opposite to the one side surface. That is, the plurality of concave portions may have a concave shape from the one side surface 310S1 toward the magnet 413. The plurality of concave portions may include a first concave portion 313 and a second concave portion 315.

The first concave portion 313 may be disposed in a central region of one side surface 310S1 of the magnet holder 310. The first concave portion 313 may be disposed in a region corresponding to the second lens assembly 220 in a first direction (x-axis direction). In detail, the first concave portion 313 may be disposed in a region corresponding to the first protruding portion 225a of the second lens assembly 220 to be described later in a first direction. The first protruding portion 225a may be disposed within the first concave portion 313. The first concave portion 313 may have a set shape. For example, the upper shape of the first concave portion 313 may have at least one shape among a polygonal shape, a circular shape, and an elliptical shape. The upper shape of the first concave portion 313 may correspond to the shape of the first and second protruding portions 225a and 225b of the second lens assembly 220 to be described later.

The first concave portion 313 may have a set depth, for example, a depth d11 of a first direction (x-axis direction). The depth d11 of the first concave portion 313 in the first direction may be greater than about 50% of a total depth d1 of the concave portion. In detail, the depth d11 of the first concave portion 313 in the first direction may be greater than about 50% and less than 70% of the total depth d1 of the concave portion. When the depth d11 of the first concave portion 313 in the first direction is less than or equal to about 50% of the total depth d1, a region into which the protruding portions 225a and 225b of the second lens assembly 220 to be described later are inserted may be relatively small. It may be difficult to effectively secure a space in which the adhesive member 500 is disposed between the two components 220 and 310. For this reason, it may be difficult to firmly couple the second lens assembly 220 and the magnet holder 310.

When the depth d11 of the first concave portion 313 in the first direction is about 70% or more of the total depth d1, the reliability of the magnet holder 310 may deteriorate. In detail, when the depth d11 in the first direction is about 70% or more, the thickness of the region corresponding to the first concave portion 313 in the magnet holder 310 is relatively thin, so that the reliability of the magnet holder 310 may deteriorate. Accordingly, it is preferable that the depth d11 of the first concave portion 313 in the first direction satisfies the aforementioned range. A length of the first concave portion 313 in the second direction (y-axis direction) may be shorter than a length of the magnet 413 in the second direction. Also, the length W1 of the first concave portion 313 in the third direction (z-axis direction) may be longer than the length of the magnet 413 in the third direction. In detail, it is preferable that the length W1 of the first concave portion 313 in the second direction and the third direction have the above-described sizes in consideration of reliability of the magnet holder 310. In addition, the length W1 of the first concave portion 313 in the third direction may decrease from the top to the bottom of the first concave portion 313 in the first direction (x-axis direction). Here, the upper portion of the first concave portion 313 may refer to a region adjacent to the second lens assembly 220 and the lower portion may refer to a region adjacent to the magnet 413.

The first concave portion 313 may include a first inner surface 313S2 and a first bottom surface 313S1. The first inner surface 313S2 may be a surface extending from one side surface 310S1 of the magnet holder 310. In detail, the first inner surface 313S2 may be a surface extending from an edge region of the one side surface 310S1 toward the other side 310b. The first bottom surface 313S1 may be a surface extending from one end of the first inner surface 313S2. In detail, the first bottom surface 313S1 may be a surface extending from one end of the first inner surface 313S2 in a third direction (z-axis direction). The first bottom surface 313S1 may be parallel to one side surface 310S 1 of the magnet holder 310.

The second concave portion 315 may be disposed within the first concave portion 313. The second concave portion 315 may be disposed on the first bottom surface 313S1 of the first concave portion 313. The second concave portion 315 may be disposed in a region that does not overlap with the ball bearing 350 in the first direction. The second concave portion 315 may have a set shape. For example, the upper shape of the second concave portion 315 may have at least one shape among a polygonal shape, a circular shape, and an elliptical shape. An upper shape of the second concave portion 315 may correspond to a shape of protruding portions 225a and 225b of the second lens assembly 220 to be described later.

The second concave portion 315 may have a set depth, for example, a depth d12 in the first direction (x-axis direction). The depth d12 of the second concave portion 315 in the first direction may be about 50% or less of a total depth d1 of the concave portion. In detail, the depth d12 of the second concave portion 315 in the first direction may be greater than or equal to about 30% and less than or equal to about 50% of the total depth d1 of the concave portion. When the depth d12 of the second concave portion 315 in the first direction is less than about 30% of the total depth d1, a region into which the protruding portions 225a and 225b of the second lens assembly 220 to be described later are inserted may be relatively small. In addition, it may be difficult to effectively secure a space in which the adhesive member 500 is disposed between the two components 220 and 310. For this reason, it may be difficult to firmly couple the second lens assembly 220 and the magnet holder 310.

When the depth d12 of the second concave portion 315 in the first direction exceeds about 50% of the total depth d1, reliability of the magnet holder 310 may deteriorate. In detail, when the depth d12 in the first direction exceeds about 50%, the thickness of the region corresponding to the second concave portion 315 in the magnet holder 310 is relatively thin, so that the reliability of the magnet holder 310 may deteriorate. Accordingly, it is preferable that the depth d12 of the second concave portion 315 in the first direction satisfies the aforementioned range. A length of the second concave portion 315 in the second direction (y-axis direction) may be shorter than a length of the magnet 413 in the second direction. Also, the length W2 of the second concave portion 315 in the third direction (z-axis direction) may be shorter than the length of the first concave portion 313 in the third direction. In detail, it is preferable that the length W2 of the second concave portion 315 in the second direction and the length W2 of the third direction have the above-described sizes in consideration of reliability of the magnet holder 310. In addition, the length W2 of the second concave portion 315 in the third direction may change or be constant from the upper portion toward the lower portion of the second concave portion 315 based on the first direction (x-axis direction). Here, the upper portion of the second concave portion 315 may refer to a region adjacent to the second lens assembly 220 and the lower portion thereof may refer to a region adjacent to the magnet 413.

The second concave portion 315 may include a second inner surface 315S2 and a second bottom surface 315S1. The second inner surface 315S2 may be a surface extending from one end of the first bottom surface 313S1 of the first concave portion 313. In detail, the second inner surface 315S2 may be a surface extending from one end of the first bottom surface 313S1 toward the other side 310b. The second bottom surface 315S1 may be a surface extending from one end of the second inner surface 315S2. In detail, the second bottom surface 315S1 may be a surface extending from one end of the second inner surface 315S2 in a third direction (z-axis direction). The second bottom surface 315S1 may be parallel to one side surface 310S1 of the magnet holder 310 and the first bottom surface 313S1.

The second concave portion 315 may be provided in plurality. For example, the second concave portion 315 includes a 2-1 concave portion 315a and a 2-2 concave portion 315b spaced apart from each other in a second direction (y-axis direction) on the first bottom surface 313S1. The 2-1 concave portion 315a and the 2-2 concave portion 315b may have the same shape and size as each other. The 2-1 concave portion 315a may be disposed in a region corresponding to the second lens assembly 220. For example, the 2-1 concave portion 315a may be disposed in a region corresponding to the second lens assembly 220 in the first direction (x-axis direction). In detail, the 2-1 concave portion 315a may be disposed in a region overlapping in the first direction with the protruding portions 225a and 225b of the second lens assembly 220 to be described later. The second protruding portion 225b of the second lens assembly 220 may be disposed in the 2-1 concave portion 315a. The 2-2 concave portion 315b may be disposed in a region that does not correspond to the second lens assembly 220. In detail, the 2-2 concave portion 315b may be disposed in a region that does not correspond to the protruding portions 225a and 225b of the second lens assembly 220 in the first direction. The first protruding portion 225a and the second protruding portion 225b may not be disposed within the 2-2 concave portion 315b. The first concave portion 313 and the second concave portion 315 may be regions formed to control the application amount of the adhesive member 500. In addition, the first concave portion 313 and the second concave portion 315 may be regions formed in consideration of alignment characteristics, reliability, and balance when assembling the magnet holder 310 and the second lens barrel 222.

The first concave portion 313 and the second concave portion 315 may have different inclinations. For example, the first inner surface 313S2 and the second inner surface 315S2 may be provided at different inclination angles. In detail, the first inner surface 313S2 with respect to one side surface 310S1 of the magnet holder 310 may have a first inclination angle θ1, and the second inner surface 315S2 with respect to one side surface 310S1 of the magnet holder 310 may have a second inclination angle θ2. The first inclination angle θ1 may be greater than 90 degrees, and the second inclination angle θ2 may be greater than or equal to 90 degrees. For example, the first inclination angle θ1 may be greater than the second inclination angle θ2. In detail, the first inclination angle θ1 may be about 1.05 times greater than the second inclination angle θ2. In detail, the first inclination angle θ1 may be about 1.1 times greater than the second inclination angle θ2. Accordingly, the protruding portions 225a and 225b of the second lens assembly 220 to be described later may be effectively disposed within the first concave portion 313 and the second concave portion 315. In addition, as the first inclination angle θ1 and the second inclination angle θ2 satisfy the aforementioned range, sufficient space may be secured for arrangement of the adhesive member 500 in the first concave portion 313 and the second concave portion 315. In addition, when the first inclination angle θ1 and the second inclination angle θ2 satisfy the above-described ranges, when the second lens assembly 220 and the magnet holder 310 are assembled, it is possible to prevent the adhesive member 500 from spilling over to one side surface 222S1 or 310S1 of the two components 220 or 310.

The magnet holder 310 may further include at least one bridge portion 317. For example, the bridge portion 317 may include a first bridge portion 317a disposed between one end of the 2-1 concave portion 315a and one end of the 2-2 concave portion 315b. The first bridge portion 317a may be disposed in a region corresponding to the center of the first concave portion 313. The 2-1 concave portion 315a and the 2-2 concave portion 315b may be distinguished by the first bridge portion 317a. In addition, the bridge portion 317 may include a second bridge portion 317b disposed on the other end of the 2-1 concave portion 315a and a third bridge portion 317c disposed on the other end of the 2-2 concave portion 315b. The 2-1 concave portion 315a may be disposed between the first bridge portion 317a and the second bridge portion 317b, and the 2-2 concave portion 315b may be disposed between the first bridge portion 317a and the second bridge portion 317b. An upper surface of the bridge portion 317 may be disposed on the same plane as a bottom surface 313S1 of the first concave portion 313. In detail, the upper surface of the first bridge portion 317a and the first bottom surface 313S1 may be disposed on the same plane. That is, the bridge portion 317 may be formed in a region between the plurality of second concave portions 315 and an end region. Accordingly, it is possible to prevent the reliability of the magnet holder 310 from being lowered by the second concave portion 315.

An amount of an adhesive member 500 applied between the second lens barrel 222 and the magnet holder 310 may be controlled by the bridge portion 317. For example, the adhesive member 500 for coupling the second lens assembly 220 and the magnet holder 310 may be applied in the 2-1 concave portion 315a. At this time, the second inner surface 315S2 of the 2-1 concave portion 315a, the first bridge portion 317a, and the second bridge portion 317b may serve as a partition wall to prevent the adhesive member 500 from overflowing. Then, when the second lens assembly 220 and the magnet holder 310 are coupled, the adhesive member 500 may spread evenly between the second lens assembly 220 and the concave portions 313 and 315 of and the magnet holder 310. Accordingly, when assembling the second lens assembly 220 and the magnet holder 310, the two components 220 and 310 may be firmly coupled, and the position of the second lens assembly 220 may be effectively controlled and aligned.

The second lens assembly 220 may include at least one protruding portion. In detail, the protruding portion may be disposed on one side 222a of the second lens assembly 220 facing the one side 310a of the magnet 413. In more detail, the protruding portion may be disposed on one side surface 222S1 of the second lens assembly 220 facing the one side surface 310S1 of the magnet 413. A plurality of protruding portions may be disposed on the one side surface 222S1. The plurality of protruding portions may protrude from the side surface 222S1 toward the magnet holder 310. In detail, the protruding portion may protrude toward the concave portion of the magnet holder 310. The protruding portion may be disposed in a region corresponding to the concave portion of the magnet holder 310 in the first direction (x-axis direction).

The plurality of protruding portions may include a first protruding portion 225a and a second protruding portion 225b. The first protruding portion 225a may be disposed in a central region of one side surface 222S1 of the second lens assembly 220. The first protruding portion 225a may be disposed in a region corresponding to the concave portion of the magnet holder 310. For example, the first protruding portion 225a may be disposed in a region corresponding to the first concave portion 313 in the first direction (x-axis direction). In detail, the first protruding portion 225a may be disposed in a region overlapping the first concave portion 313 in the first direction. The first protruding portion 225a may protrude toward the first concave portion 313. The first protruding portion 225a may be inserted into the first concave portion 313. The first protruding portion 225a may have a set shape. For example, the first protruding portion 225a may have a shape corresponding to that of the first concave portion 313. The first protruding portion 225a may have a set height, for example, a height d21 in the first direction (x-axis direction). A height d21 of the first protruding portion 225a in the first direction may be greater than about 50% of a total height d2 of the protruding portion. In detail, the height d21 of the first protruding portion 225a in the first direction may be greater than about 50% and less than about 70% of the total height d2 of the protruding portion. When the height d21 of the first protruding portion 225a in the first direction is equal to or less than about 50% of the total height d2, a region in which the first protruding portion 225a is inserted into the first concave portion 313 may be relatively small. In addition, when the second lens assembly 220 and the magnet holder 310 are coupled as the distance formed between the first protruding portion 225a and the first concave portion 313 increases, the second lens assembly 220 may deteriorate.

When the height d21 of the first protruding portion 225a in the first direction is about 70% or more of the total height d2, the height d22 of the second protruding portion 225b in the first direction, which will be described later, may be relatively small. Accordingly, coupling force between the second lens assembly 220 and the magnet holder 310 may decrease. Accordingly, it is preferable that the height d21 of the first protruding portion 225a in the first direction satisfies the aforementioned range. A length of the first protruding portion 225a in the second direction (y-axis direction) may be shorter than a length of the first concave portion 313 in the second direction and a length of the second concave portion 315 in the second direction. A length W3 of the first protruding portion 225a in the third direction (z-axis direction) may be smaller than a length W1 of the first concave portion 313 in the third direction. In addition, the length W3 of the first protruding portion 225a in the third direction may decrease from the upper portion toward the lower portion of the first concave portion 313 based on the first direction (x-axis direction). Accordingly, the first protruding portion 225a may be effectively inserted into the first concave portion 313, and a space in which the adhesive member 500 is disposed may be secured between the first protruding portion 225a and the first concave portion 313.

The first protruding portion 225a may include a first outer surface 225S2 and a third bottom surface 225S1. The first outer surface 225S2 may be a surface extending from one side surface 222S1 of the second lens assembly 220. In detail, the first outer surface 225S2 may be a surface extending from an edge region of the one side surface 222S1 toward the first bottom surface 313S1. The first outer surface 225S2 may be spaced apart from the first inner surface 313S2. The third bottom surface 225S1 may be a surface extending from one end of the first outer surface 225S2. In detail, the third bottom surface 225S1 may be a surface extending in a third direction (z-axis direction) from one end other than the first outer surface 225S2. The third bottom surface 225S1 may be spaced apart from and parallel to the first bottom surface 313S1.

The second protruding portion 225b may be disposed on the first protruding portion 225a. The second protruding portion 225b may be disposed in a central region of the first protruding portion 225a. The second protruding portion 225b may be disposed on the third bottom surface 225S1. The second protruding portion 225b may be disposed in a region corresponding to the second concave portion 315. For example, the second protruding portion 225b may be disposed in a region overlapping the second concave portion 315 in a first direction (x-axis direction). In detail, based on the first direction (x-axis direction), the second protruding portion 225b is disposed in a region overlapping the 2-1 concave portion 315a, and the 2-2 concave portion 315b and may not overlap. The second protruding portion 225b may have a shape protruding toward the 2-1 concave portion 315a. The second protruding portion 225b may be inserted into the 2-1 concave portion 315a. The second protruding portion 225b may not overlap the ball bearing 350 in the first direction. The second protruding portion 225b may have a set shape. For example, the second protruding portion 225b may have a shape corresponding to that of the 2-1 concave portion 315a.

The second protruding portion 225b may have a set height, for example, a height d22 in the first direction (x-axis direction). The height d22 of the second protruding portion 225b in the first direction may be smaller than a height d21 of the first protruding portion 225a in the first direction. The height d22 of the second protruding portion 225b in the first direction may be equal to or less than about 50% of a total height d2 of the protruding portion. In detail, the height d22 of the second protruding portion 225b in the first direction may be greater than or equal to about 30% and less than or equal to about 50% of the total height d2 of the protruding portion. When the height d22 of the second protruding portion 225b in the first direction is less than about 30% of the total height d2, the height of the second protruding portion 225b inserted into the second concave portion 315 may be relatively low. In addition, when the second lens assembly 220 and the magnet holder 310 are coupled as the distance between the second protruding portion 225b and the second concave portion 315 increases, alignment characteristics of the second lens assembly 220 may deteriorate. When the height d22 of the second protruding portion 225b in the first direction exceeds about 50% of the total height d2, the depth d12 of the second concave portion 315 in the first direction increases, and a thickness of a region of the magnet holder 310 corresponding to the second concave portion 315 may be relatively thin. As a result, reliability of the magnet holder 310 may deteriorate. Therefore, it is preferable that the height d22 of the second protruding portion 225b in the first direction satisfies the aforementioned range.

A length of the second protruding portion 225b in the second direction (y-axis direction) may be the same as or different from the length of the first protruding portion 225a in the second direction. The length of the second protruding portion 225b in the second direction may be shorter than a length of the first concave portion 313 in the second direction and a length of the second concave portion 315 in the second direction. Also, a length W4 of the second protruding portion 225b in the third direction (z-axis direction) may be smaller than a length W2 of the second concave portion 315 in the third direction (z-axis direction). In detail, the length W4 of the second protruding portion 225b in the third direction may be smaller than the length W2 of the second-first concave portion 315a into which the second concave portion 315 is inserted. In addition, the length W4 of the second protruding portion 225b in the third direction may decrease from the upper portion toward the lower portion of the second concave portion 315 based on the first direction (x-axis direction). Accordingly, the second protruding portion 225b may be effectively inserted into the second concave portion 315, and a space in which the adhesive member 500 is disposed may be secured between the second protruding portion 225b and the second concave portion 315.

The second protruding portion 225b may include a second outer surface 225S4 and a fourth bottom surface 225S3. The second outer surface 225S4 may be a surface extending from one end of the third bottom surface 225S1 of the first protruding portion 225a. In detail, the second outer surface 225S4 may be a surface extending from one end of the third bottom surface 225S1 toward the second bottom surface 315S1. The second outer surface 225S4 may be spaced apart from the second inner surface 315S2. The fourth bottom surface 225S3 may be a surface extending from one end of the second outer surface 225S4. In detail, the fourth bottom surface 225S3 may be a surface extending from one end of the second outer surface 225S4 in a third direction (z-axis direction). The fourth bottom surface 225S3 may be spaced apart from and parallel to the second bottom surface 315S1.

The first protruding portion 225a and the second protruding portion 225b may have different inclinations. For example, the first outer surface 225S2 and the second outer surface 225S4 may be provided at different inclination angles. In detail, with respect to one side surface 222S1 of the second lens assembly 220, the first outer surface 225 S2 may have a third inclination angle θ3, and the second outer surface 225S4 may have a fourth inclination angle θ4. The third inclination angle θ3 and the fourth inclination angle θ4 may be greater than 90 degrees. For example, the third inclination angle θ3 may be greater than or equal to the first inclination angle θ1. Also, the fourth inclination angle θ4 may be greater than the first inclination angle θ1, the second inclination angle θ2, and the third inclination angle θ3. In detail, the fourth inclination angle θ4 may be about 1.1 times greater than the second inclination angle θ2. In more detail, the fourth inclination angle θ4 may be about 1.2 times greater than the second inclination angle θ2. Accordingly, the second protruding portion 225b may be effectively disposed within the second concave portion 315, and may be secure a sufficient space between the second protruding portion 225b and the second concave portion 315 disposing the adhesive member 500. In addition, when the third inclination angle θ3 and the fourth inclination angle θ4 satisfy the aforementioned range, when the second lens assembly 220 and the magnet holder 310 are assembled, it is possible to prevent the adhesive member 500 from overflowing to one side surfaces 222S1 and 310S1 of the two components 220 and 310.

The adhesive member 500 may be disposed between the second lens assembly 220 and the magnet holder 310. The second lens assembly 220 may be physically coupled to the magnet holder 310 via the adhesive member 500. In detail, the second lens barrel 222 and the magnet holder 310 may be physically coupled to each other through the adhesive member 500.

The adhesive member 500 may include an adhesive material. For example, the adhesive member 500 may include a resin-based adhesive material. In detail, the adhesive member 500 may include various adhesive material such as acrylic resin, alpha-olefin resin, polyurethane resin, polyurethane solvent type, polyurethane resin (TPU), Ether cellulose, Epoxy resin, Silicone adhesives, Phenolic resin, Polyimide, Polystyrene solvent type, Polyvinyl alcohol, PVAL, a melamine resin, a photocurable adhesive material, a thermosetting adhesive material, and the like.

The adhesive member 500 may be disposed in a region set between the second lens assembly 220 and the magnet holder 310. For example, one side surface 222S1 of the second lens assembly 220 may be parallel to and directly contact one side surface 310S1 of the magnet holder 310. In this case, the adhesive member 500 may not be disposed between the two side surfaces 222S1 and 310S1. In detail, the adhesive member 500 may not disposed between an edge region of the edge region of one side surface 222S1 of the second lens assembly 220 disposed around the protruding portions 225a and 225b and an edge region of the one side surface 310S1 of the magnet holder 310 disposed around the concave portions 313 and 315. The adhesive member 500 may be disposed in a region between the second bottom surface 315S1 and the fourth bottom surface 225S3 and between the second inner surface 315S2 and the second outer surface 225S4 spaced apart from each other. The adhesive member 500 may directly contact the second bottom surface 315S1, the fourth bottom surface 225S3, the second inner surface 315S2, and the second outer surface 225S4. The adhesive member 500 may be disposed in a region between the first bottom surface 313S1 and the third bottom surface 225S1 and in a region between the first inner surface 313S2 and the first outer surface 225S2. The adhesive member 500 may directly contact the first bottom surface 313S1, the third bottom surface 225S1, the first inner surface 313S2, and the first outer surface 225S2. That is, the adhesive member 500 is disposed between the protruding portions 225a and 225b and the concave portions 313 and 315 spaced apart from each other, and may be in direct contact with the protruding portions 225a and 225b and the concave portions 313 and 315. Also, the height (x-axis direction) of the adhesive member 500 may be smaller than the total depth d1 of the concave portions 313 and 315 of the magnet holder 310.

The embodiment may include the second lens assembly 220 including protruding portions 225a and 225b and the magnet holder 310 including concave portions 313 and 315. At this time, the protruding portions 225a and 225b of the second lens assembly 220 may be provided at a height d2 lower than the depth d1 of the concave portions 313 and 315 in the first direction, and may have widths W3 and W4 smaller than the widths W1 and W2 of the concave portions 313 and 315 in the third direction. In addition, each of the protruding portions 225a and 225b and the concave portions 313 and 315 may have set inclination angles θ1, θ2, θ3, and θ4. Accordingly, in the process of assembling the second lens assembly 220 and the magnet holder 310, the second lens assembly 220 may be effectively guided and inserted by the protruding portions 225a and 225b and the concave portions 313 and 315.

A space in which the adhesive member 500 is disposed is secured between the second lens assembly 220 and the magnet holder 310 so that the two components 220 and 310 may be firmly coupled. In detail, as the protruding portions 225a and 225b and the concave portions 313 and 315 have set sizes, the amount of the adhesive member 500 may be effectively controlled. In addition, in the assembly process of the two components 220 and 310, the adhesive member 500 may spread evenly between the protruding portions 225a and 225b and the concave portions 313 and 315 and may prevent overflow between one side surfaces 222S1 and 310S1 of the two components 220 and 310. In this embodiment, alignment characteristics of the second lens assembly 220 may be improved. In detail, optical performance may be implemented only when the second lens assembly 220 connected to the first driving portion 410 in the first camera actuator 1000 is aligned within a set error range. For example, when the second lens assembly 220 is out of the error range, there is a problem in that an out-of-focus region for an object occurs or an object located at a near distance cannot be focused. However, the embodiment may effectively guide the second lens assembly 220 by the above-described protruding portions 225a and 225b and the concave portions 313 and 315, and one side surface 222S1 of the second lens assembly 220 and one side surface 310S1 of the magnet holder 310 that are substantially parallel to each other may be placed in direct contact with each other. Accordingly, during the assembling process, the alignment characteristics of the second lens assembly 220 and the magnet holder 310 may be controlled through the two side surfaces 222S1 and 310S1. As the protruding portions 225a and 225b are provided in a smaller size than the concave portions 313 and 315 during the coupling process, the position of the second lens assembly 220 may be controlled in various directions (first to third directions (x, y, and z-axis directions)). Accordingly, the first camera actuator 1000 may be aligned in a position to realize optimal optical characteristics, and manufacturing defects may be reduced, resulting in improved process efficiency.

### <Second camera actuator 2000>

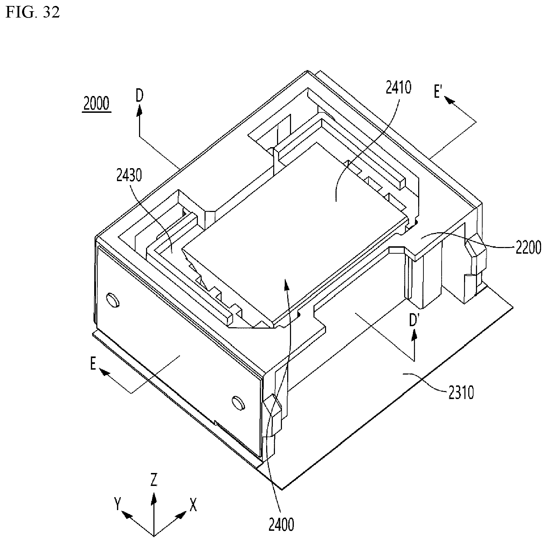

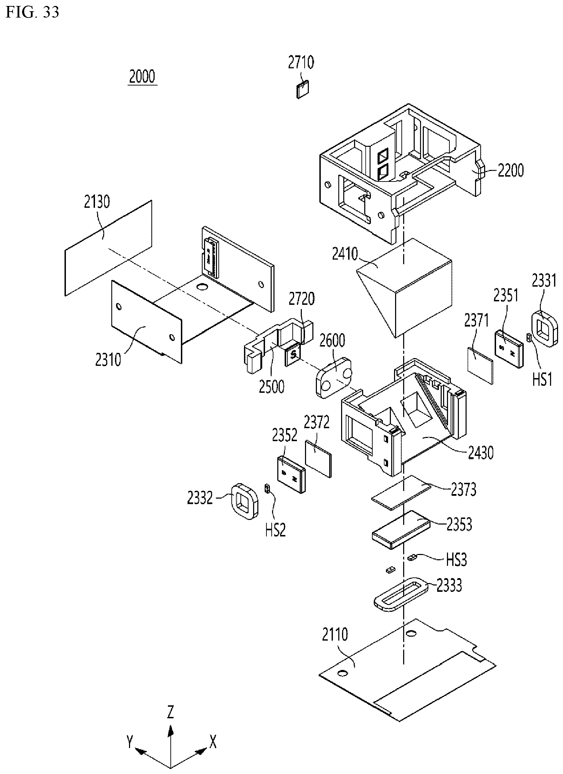

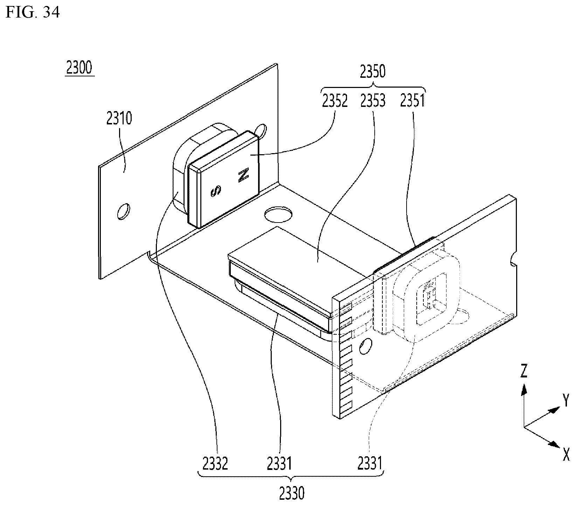

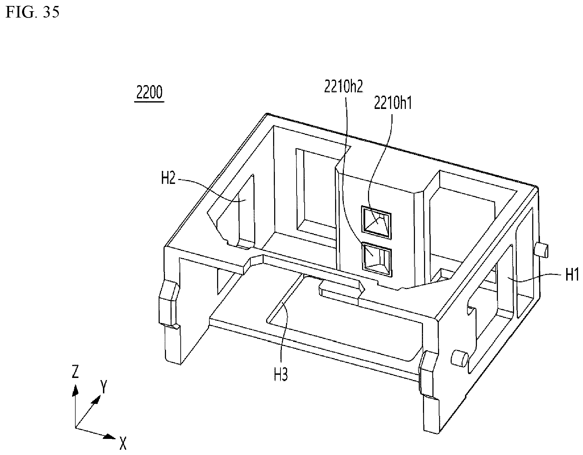

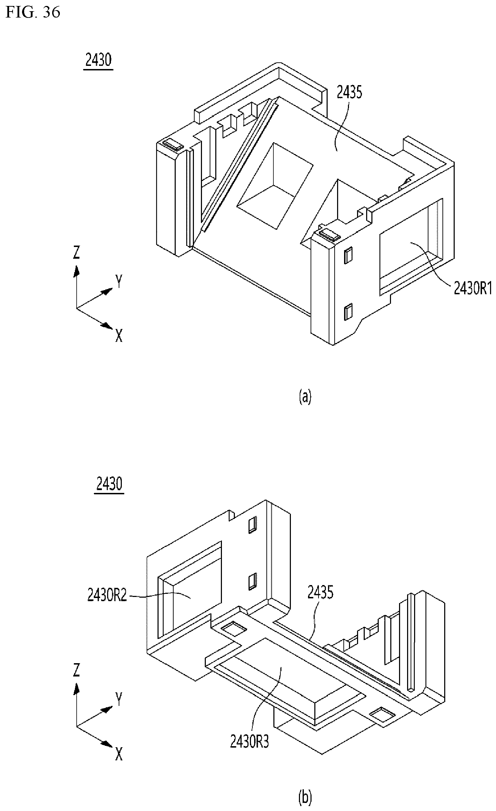

The second camera actuator 2000 according to the embodiment will be described in more detail with reference to FIGS. 32 to 36. FIG. 32 is a perspective view of a second camera actuator according to an embodiment, FIG. 33 is an exploded perspective view of the second camera actuator according to an embodiment, FIG. 34 is a perspective view of a driving portion of the second camera actuator according to an embodiment, FIG. 35 is a perspective view of a housing of the second camera actuator according to an embodiment, and FIG. 36 is a perspective view of a prism mover of the second camera actuator according to an embodiment.

Referring to FIGS. 32 to 36, the second camera actuator 2000 may be an optical image stabilizer (OIS) actuator. The second camera actuator 2000 may change a path of light incident on the camera module 10. Referring to FIGS. 32 and 33, the second camera actuator 2000 may include a housing 2200, a second driving portion 2300, a prism unit 2400, a holder 2500, and a moving plate 2600. The housing 2200 may include a receiving space therein. For example, the housing 2200 may include a space to accommodate the prism unit 2400. The housing 2200 may have a shape in which at least one side surface is open. The housing 2200 may include a rigid material. For example, the housing 2200 may include a material having predetermined reliability, such as resin, metal, or ceramic, and may support components disposed therein. A lower cover 2110 may be disposed on a bottom surface of the housing 2200, and a rear cover 2130 may be disposed on a rear surface of the housing 2200.

The second driving portion 2300 may include a second substrate 2310, a coil portion 2330 and a magnet portion 2350. The second substrate 2310 may be connected to a power supply unit (not shown) to apply power to the coil portion 2330. The second substrate 2310 includes a circuit board having a wiring pattern that may be electrically connected, such as a rigid printed circuit board (Rigid PCB), a flexible PCB, and a rigid flexible PCB. The coil portion 2330 may be electrically connected to the second substrate 2310. The coil portion 2330 may include one or a plurality of coil portions. For example, the coil portion 2330 may include a first coil 2331, a second coil 2332, and a third coil 2333. The first coil 2331, the second coil 2332, and the third coil 2333 may be spaced apart from each other. For example, the second substrate 2310 may have a 'c' shape, and the first coil 2331 and the second coil 2332 may be disposed on the first and second surface of the second substrate 2310 facing each other in a first direction (x-axis direction), respectively. Also, the third coil 2333 may be disposed on a third surface connecting the first and second surfaces of the second substrate 2310.

The magnet portion 2350 may include one or a plurality of magnets. For example, the magnet portion 2350 may include a first magnet 2351, a second magnet 2352, and a third magnet 2353 disposed on a region corresponding to the coil portion 2330. In detail, the first magnet 2351 may be disposed on the first surface of the second substrate 2310. The first magnet 2351 may be disposed on a region corresponding to the first coil 2331. The first magnet 2351 may be disposed on a region corresponding to a first outer surface of the prism unit 2400 to be described later. Also, the second magnet 2352 may be disposed on the second surface of the second substrate 2310. The second magnet 2352 may be disposed on a region corresponding to the second coil 2332. The second magnet 2352 may be disposed on a region corresponding to the second outer surface of the prism unit 2400. Also, the third magnet 2353 may be disposed on a third surface of the second substrate 2310. The third magnet 2353 may be disposed on a region corresponding to the third coil 2333. The third magnet 2353 may be disposed on a region corresponding to the third outer surface of the prism unit 2400.

The second driving portion 2300 may further include a yoke portion 2370. The yoke portion 2370 may include one or a plurality of yokes. For example, the yoke portion 2370 may include a first yoke 2371, a second yoke 2372, and a third yoke 2373 disposed on regions corresponding to the coil portion 2330 and the magnet portion 2350. The first to third yokes 2371, 2372, and 2373 may provide a magnetic flux shielding function for the first to third magnets 2351, 2352, and 2353 disposed on the corresponding regions, respectively. In detail, the first yoke 2371 may be disposed on a region corresponding to the first coil 2331 and the first magnet 2351. The first magnet 2351 may be disposed between the first yoke 2371 and the first coil 2331. Also, the second yoke 2372 may be disposed on a region corresponding to the second coil 2332 and the second magnet 2352. The second magnet 2352 may be disposed between the second yoke 2372 and the second coil 2332. Also, the third yoke 2373 may be disposed on a region corresponding to the third coil 2333 and the third magnet 2353. The third magnet 2353 may be disposed between the third yoke 2373 and the third coil 2333. The second driving portion 2300 may further include a sensing portion. The sensing portion may include a position detection sensor capable of detecting a position. The sensing portion may include at least one hall sensor, a gyro sensor, and the like. For example, the sensing portion may include a first hall sensor HS1 disposed adjacent to the first coil 2331 and a second hall sensor HS2 disposed adjacent to the second coil 2332. Each of the first hall sensor HS1 and the second hall sensor HS2 may detect positions of the first magnet 2351 and the second magnet 2352. In addition, the sensing portion may include a third hall sensor HS3 disposed adjacent to the third coil 2333. One or a plurality of third hall sensors HS3 are provided as shown in the drawing to sense the position of the third magnet 2353. The second driving portion 2300 may tilt the prism unit 2400. In detail, the second driving portion 2300 may control the tilting of the prism unit 2400 in a first axis or a second axis by applied power.

Referring to FIG. 35, the housing 2200 may include a receiving space to accommodate the prism unit 2400. The housing 2200 may include a plurality of inner surfaces. For example, the housing 2200 may include a first inner surface corresponding to the first surface of the second substrate 2310, a second inner surface corresponding to the second surface of the second substrate 2310, and a third inner surface corresponding to the third surface of the second substrate 2310. In detail, the housing 2200 may include a first inner surface corresponding to the first coil 2331 and a second inner surface corresponding to the second coil 2332. The first inner surface and the second inner surface may face each other in a first direction (x-axis direction). The housing 2200 may further include a third inner surface, a fourth inner surface, and a fifth inner surface. The third inner surface may be disposed on a region corresponding to the third coil 2333. The third inner surface may be disposed between the first and second inner surfaces to connect the two inner surfaces. The third inner surface may have a shape extending in the first direction (x-axis direction). The fourth inner surface may be disposed between the first and second inner surfaces. The fourth inner surface may face the first camera actuator 1000. The fourth inner surface may include an opening formed in a region corresponding to the prism 2410. The fourth inner surface may have an open shape. The fifth inner surface may be disposed between the first and second inner surfaces. The fifth inner surface may be a surface facing the fourth inner surface in a second direction (y-axis direction). The fifth inner surface may be partially opened, and a holder 2500 to be described later may be inserted into the open region and coupled with the prism mover 2430.

The housing 2200 may include a plurality of housing holes. The housing hole may be a hole penetrating the outer and inner surfaces of the housing 2200. The plurality of housing holes may include a first housing hole H1, a second housing hole H2, and a third housing hole H3. The first housing hole H1 may be a through hole passing through an outer surface corresponding to the first inner surface. The first housing hole H1 may be disposed in a region corresponding to the first coil 2331. Also, the first housing hole H1 may have a size and shape corresponding to that of the first coil 2331. Accordingly, the first coil 2331 may be partially or entirely inserted into the first housing hole H1 and disposed. The second housing hole H2 may be a through hole passing through an outer surface corresponding to the second inner surface. The first housing hole H1 may be disposed in a region corresponding to the first housing hole H1 in the first direction (x-axis direction). The second housing hole H2 may be disposed in a region corresponding to the second coil 2332. Also, the second housing hole H2 may have a size and shape corresponding to that of the second coil 2332. Accordingly, the second coil 2332 may be partially or entirely inserted into the second housing hole H2 and disposed. The first housing hole H1 may have the same size and shape as the second housing hole H2. The third housing hole H3 may be a through hole passing through an outer surface corresponding to the third inner surface. The third housing hole H3 may be disposed in a region corresponding to the third coil 2333. Also, the third housing hole H3 may have a size and shape corresponding to that of the third coil 2333. Accordingly, the third coil 2333 may be partially or entirely inserted into the third housing hole H3. The third housing hole H3 may have a size and shape different from those of the first housing hole H1 and the second housing hole H2. For example, the size of the third housing hole H3 may be larger than the sizes of the first housing hole H1 and the second housing hole H2.

The housing 2200 may include at least one groove. For example, the housing 2200 may include a first groove 2210h1 and a second groove 2210h2 formed on a fifth inner surface. The first groove 2210h1 and the second groove 2210h2 may have a concave shape from the fifth inner surface of the housing 2200 to an outer surface direction corresponding to the fifth inner surface, and are spaced apart from each other in the third direction (z-axis direction). The first groove 2210h1 and the second groove 2210h2 may be disposed on regions corresponding to the second moving portion 2620 of the moving plate 2600 to be described later. The first groove 2210h1 and the second groove 2210h2 may provide a space into which part or all of the second moving portion 2620 is inserted. The first groove 2210h1 and the second groove 2210h2 may have the same or different shapes. For example, the first groove 2210h1 and the second groove 2210h2 may have different cross-sectional shapes. Accordingly, the first groove 2210h1 and the second groove 2210h2 may provide a stopper function when the prism unit 2400 is tilt-driven by the second moving portion 2620.

Referring to FIGS. 36 to 38, the prism unit 2400 may be disposed within the housing 2200. In detail, the prism unit 2400 may be disposed within the receiving space of the housing 2200. The prism unit 2400 may include a prism 2410 and a prism mover 2430 supporting the prism 2410. The prism 2410 may be a right-angle prism. The prism 2410 may reflect the direction of light incident from the outside. That is, the prism 2410 may change a path of light incident to the second camera actuator 2000 from the outside toward the first camera actuator 1000. The prism mover 2430 may support the prism 2410. The prism 2410 may be disposed on the prism mover 2430. The prism mover 2430 may be disposed surrounding the prism 2410. At least one side of the prism mover 2430 may be open and may include a receiving space therein. For example, the prism mover 2430 may have a structure in which a plurality of external surfaces connected to each other are open. In detail, the prism mover 2430 may have a structure in which an outer surface corresponding to the prism 2410 is open, and may include a receiving space defined as a first space 2435 therein. The first space 2435 may have a shape corresponding to that of the prism 2410. The first space 2435 includes an inclined surface, and the prism 2410 may be disposed and fixed in the first space 2435 of the prism mover 2430. The prism unit 2400 may include a plurality of outer surfaces. In detail, the prism mover 2430 may include a plurality of outer surfaces. For example, the prism mover 2430 may include a first outer surface corresponding to the first inner surface of the housing 2200 and a second outer surface corresponding to the second inner surface. In addition, the prism mover 2430 may include a third outer surface corresponding to the third inner surface of the housing 2200. The third outer surface may be a surface connecting the two outer surfaces between the first and second outer surfaces. The third outer surface may be a bottom surface of the prism mover 2430. In addition, the prism mover 2430 may include a fifth outer surface corresponding to the fifth inner surface. The fifth outer surface may be a surface connecting the two outer surfaces between the first and second outer surfaces, or may be a surface connected to the third outer surface.

The prism mover 2430 may include a plurality of recesses. Each of the plurality of recesses may have a concave shape on an outer surface of the prism mover 2430 toward the center of the prism mover 2430. The plurality of recesses may include a first recess 2430R1, a second recess 2430R2, and a third recess 2430R3. The first recess 2430R1 may be disposed on the first outer surface. The first recess 2430R1 may be disposed on a region corresponding to the first housing hole H1. Also, the second recess 2430R2 may be disposed on the second outer surface. The second recess 2430R2 may be disposed on a region corresponding to the second housing hole H2. The second recess 2430R2 may be disposed to face the first recess 2430R1 in a first direction (x-axis direction). Also, the third recess 2430R3 may be disposed on the third outer surface. The third recess 2430R3 may be disposed on a region corresponding to the third housing hole H3. The magnet portion 2350 and the yoke portion 2370 may be disposed in the first to third recesses 2430R1, 2430R2, and 2430R3. For example, the first magnet 2351 and the first yoke 2371 are within the first recess 2430R1, and the second magnet 2352 and the second yoke 2372 are within the second recess 2430R1. In the third recess 2430R2, the third magnet 2353 and the third yoke 2373 are respectively disposed in the third recess 2430R3, and the yokes 2371, 2372, and 2373 and the magnets 2351, 2352, and 2353 may be spaced apart from each other.

The plurality of recesses may further include a fourth recess 2430R4, a fifth recess 2430R5, a sixth recess 2430R6, and a seventh recess 2430R7. The fourth recess 2430R4, the fifth recess 2430R5, the sixth recess 2430R6, and the seventh recess 2430R7 may be disposed on a fifth outer surface of the prism mover 2430. The fourth recess 2430R4 and the fifth recess 2430R5 may be disposed on regions corresponding to the moving plate 2600 to be described later. The fourth recess 2430R4 and the fifth recess 2430R5 are spaced apart in the first direction (x-axis direction), and may disposed on a region overlapping the first moving portion 2610 of the moving plate 2600 in the second direction (y-axis direction). The fourth recess 2430R4 and the fifth recess 2430R5 are provided in a concave shape in the direction of the prism 2410 on the fifth outer surface of the prism mover 2430, and may provide a space in which part or all of the first moving portion 2610 is inserted. The fourth recess 2430R4 and the fifth recess 2430R5 may have the same or different shapes. For example, the fourth recess 2430R4 and the fifth recess 2430R5 may have different cross-sectional shapes. Accordingly, the fourth recess 2430R4 and the fifth recess 2430R5 may provide a stopper function when the prism unit 2400 is tilt driven by the first moving portion 2610. The sixth recess 2430R6 and the seventh recess 2430R7 may be spaced apart from the fourth recess 2430R4 and the fifth recess 2430R5. For example, the sixth and seventh recesses 2430R6 and 2430R7 may be spaced apart from the fourth and fifth recesses 2430R4 and 2430R5 in the first direction. The fourth and fifth recesses 2430R4 and 2430R5 may be disposed between the sixth and seventh recesses 2430R6 and 2430R7. The sixth recess 2430R6 and the seventh recess 2430R7 may be disposed on a region corresponding to an open region formed on the fifth inner surface of the housing 2200 in the second direction (y-axis direction). In detail, the sixth recess 2430R6 and the seventh recess 2430R7 may be disposed on a region corresponding to an end of the holder 2500 inserted through the open region of the housing 2200. The sixth recess 2430R6 and the seventh recess 2430R7 may have a concave shape from a fifth outer surface of the prism mover 2430 toward the prism 2410. Also, the sixth recess 2430R6 and the seventh recess 2430R7 may have shapes corresponding to ends of the holder 2500. Accordingly, both ends of the holder 2500 may be inserted into the sixth recess 2430R6 and the seventh recess 2430R7.

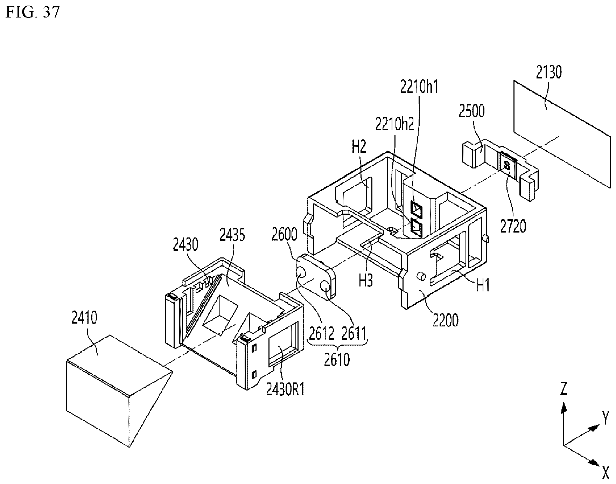

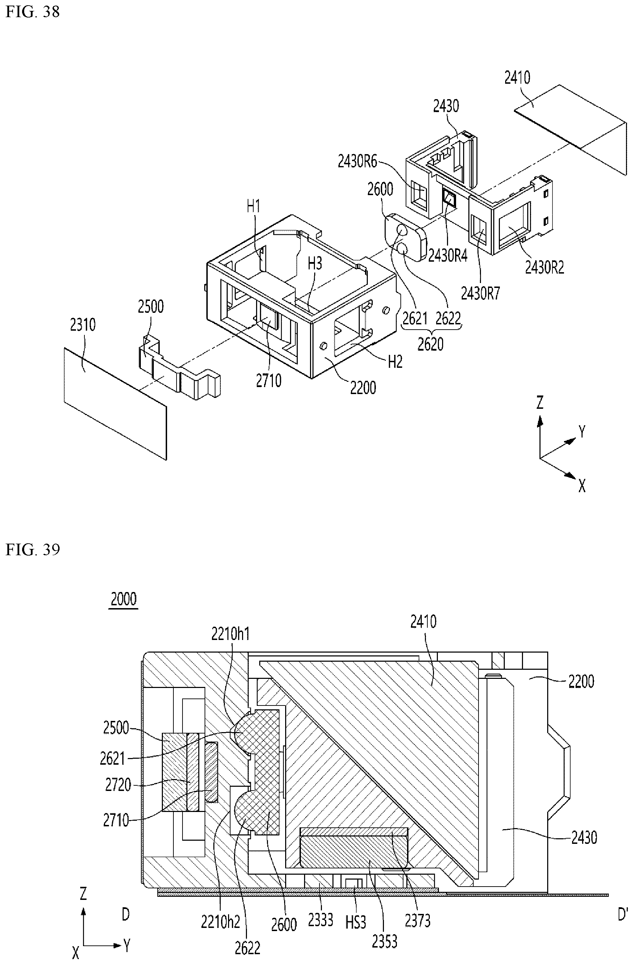

The holder 2500 may be disposed on one side of the prism unit 2400. Also, the holder 2500 may be disposed on the fifth inner surface of the housing 2200. In detail, the holder 2500 may be disposed in a region corresponding to the fifth outer surface of the prism mover 2430 and the fifth inner surface of the housing 2200 in the second direction (y-axis direction). The holder 2500 may set the position of the prism unit 2400. For example, a fifth magnet 2710 may be disposed on an outer surface of the housing 2200 facing the holder 2500, and a sixth magnet 2720 may be disposed on one surface of the holder 2500 facing the fifth magnet 2710. In this case, the fifth magnet 2710 and the sixth magnet 2720 may have different polarities or the same polarities. For example, the fifth magnet 2710 and the sixth magnet 2720 may have the same polarity as shown in FIGS. 37 and 38 and form a repulsive force between the two components. Accordingly, a repulsive force may be formed between the holder 2500 and the prism unit 2400, and the prism unit 2400 may be disposed at a set position by the repulsive force.

The moving plate 2600 may be disposed between the housing 2200 and the prism unit 2400. In detail, the moving plate 2600 may be disposed between the fifth inner surface of the housing 2200 and the fifth outer surface of the prism unit 2400. For example, the moving plate 2600 may be disposed on a region overlapping the first groove 2210h1 and the second groove 2210h2 of the housing 2200, the fourth recess 2430R4 and the fifth recess 2430R5 of the prism mover 2430 in the second direction (y-axis direction). The moving plate 2600 may include a first moving portion 2610 and a second moving portion 2620 protruding from the surface thereof. The first moving portion 2610 may be disposed on one surface of the moving plate 2600 facing the prism unit 2400. The first moving portion 2610 may include a 1-1 moving portion 2611 and a 1-2 moving portion 2612 spaced apart in the first direction (x-axis direction). The 1-1 moving portion 2611 and the 1-2 moving portion 2612 may have the same shape as each other. For example, the 1-1 moving portion 2611 and the 1-2 moving portion 2612 may have a hemispherical shape on one surface of the moving plate 2600. The 1-1 moving portion 2611 may be disposed on a region corresponding to the fourth recess 2430R4 of the prism mover 2430. The 1-1 moving portion 2611 may overlap the fourth recess 2430R4 in a second direction (y-axis direction). Also, the 1-2 moving portion 2612 may be disposed on a region corresponding to the fifth recess 2430R5 of the prism mover 2430. The 1-2 moving portion 2612 may overlap the fifth recess 2430R5 in a second direction (y-axis direction). When the prism unit 2400 is tilted by an applied driving force, the first moving portion 2610 may provide a function of guiding the tilt of the prism unit 2400. In detail, the prism unit 2400 may tilt in the third direction (z-axis direction, vertical direction) using the first moving portion 2610 spaced apart in the first direction (x-axis direction) in a as a rotation axis. In this case, the first moving portion 2610 may guide the prism unit 2400 to tilt in the third direction at a set angle.

The second moving portion 2620 may be disposed on the other surface of the moving plate 2600 facing the housing 2200. Here, the other surface of the moving plate 2600 may be a surface opposite to one surface of the moving plate 2600. The second moving portion 2620 may include a 2-1 moving portion 2621 and a 2-2 moving portion 2622 spaced apart in a third direction (z-axis direction). The 2-1 moving portion 2621 and the 2-2 moving portion 2622 may have the same shape as each other. For example, the 2-1 moving portion 2621 and the 2-2 moving portion 2622 may have a hemispherical shape on the other surface of the moving plate 2600. The 2-1 moving portion 2621 and the 2-2 moving portion 2622 may be disposed on a region corresponding to the region between the 1-1 moving portion 2611 and the 1-2 moving portion 2612. For example, the 2-1 moving portion 2621 may be disposed on a region corresponding to the first groove 2210h1 of the housing 2200. The 2-1 moving portion 2621 may overlap the first groove 2210h1 in a second direction (y-axis direction). Also, the 2-2 moving portion 2622 may be disposed on a region corresponding to the second groove 2210h2 of the housing 2200. The 2-2 moving portion 2622 may overlap the second groove 2210h2 in a second direction (y-axis direction). When the prism unit 2400 is tilted by an applied driving force, the second moving portion 2620 may provide a function of guiding the tilt of the prism unit 2400. In detail, the prism unit 2400 may tilt in a first direction (z-axis direction) using the second moving portion 2620 spaced apart in the third direction (x-axis direction, left-right direction) as a rotation axis. In this case, the second moving portion 2620 may guide the prism unit 2400 to tilt in the first direction at a set angle.

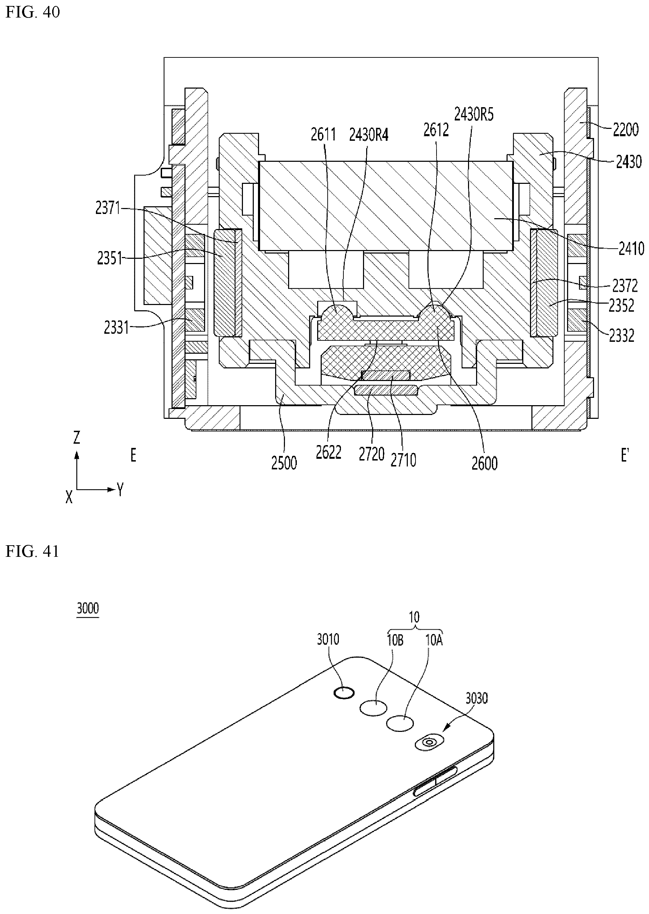

FIG. 39 is a cross-sectional view taken along line B-B' of FIG. 32, and FIG. 40 is a cross-sectional view taken along line C-C' of FIG. 22. Referring to FIGS. 39 and 40, an operation of the second camera actuator according to an embodiment will be described. The prism unit 2400 may be tilted in a first axis or a second axis by the driving force of the second driving portion 2300. Here, the first axis tilting may mean tilting in the z-axis direction (third direction, vertical direction) with the x-axis direction (first direction) illustrated in the drawing as a rotation axis, and the second axis tilting may refer to tilting in the x-axis direction (first direction, left-right direction) with the illustrated z-axis direction (third direction) as a rotation axis.

Referring to FIG. 39, the prism unit 2400 may be provided to be rotatable about a first virtual straight-line formed by the second moving portion 2620 of the moving plate 2600 in the third direction (z-axis direction). In detail, attractive and repulsive forces may be generated between the third coil 2333 and the third magnet 2353 by the current applied to the third coil 2333. The prism unit 2400 may tilt left or right in a first direction (x-axis direction) by the generated attractive and repulsive forces. At this time, the second moving portion 2620 may guide the prism unit 2400 to tilt in a set direction and a set angle. In addition, the second moving portion 2620 may provide a stopper function so that the prism unit 2400 does not tilt beyond a set angle range by the first and second grooves 2210h1 and 2210h2 formed in the housing 2200.

Referring to FIG. 40, the prism unit 2400 may be provided to be rotatable about a second virtual straight-line formed in a first direction (x-axis direction) by the first moving portion 2610 of the moving plate 2600. In detail, attractive and repulsive forces may be generated between the first coil 2331 and the first magnet 2351 by the current applied to the first coil 2331. In addition, attractive and repulsive forces may be generated between the second coil 2332 and the second magnet 2352 by the current applied to the second coil 2332. The prism unit 2400 may tilt upward or downward in the third direction (z-axis direction) by the generated attractive and repulsive forces. At this time, the first moving portion 2610 may guide the prism unit 2400 to tilt in a set direction and at a set angle. In addition, the first moving portion 2610 may provide a stopper function so that the prism unit 2400 does not tilt beyond a set angle by the fourth recess 2430R4 and the fifth recess 2430R5 formed in the prism mover 2430. That is, the second camera actuator 2000 according to the embodiment may include a second driving portion 2300 of a VCM (voice coil motor) type including a plurality of coils 2331, 2332, and 2333 and a plurality of magnets 2351, 2352, and 2353. In addition, the embodiment may implement an OIS (optical image stabilizer) by controlling the movement path of light incident by the second driving portion 2300 to the first axis and/or the second axis. At this time, the second camera actuator 2000 may have improved optical characteristics by minimizing the occurrence of decentering and tilting phenomena when implementing OIS.

FIG. 41 is a perspective view of a mobile terminal to which a camera module according to an embodiment is applied.

Referring to FIG. 41, a mobile terminal 3000 according to an embodiment may include a camera module 10 provided on a rear surface. The camera module 10 may include an image capturing function. In addition, the camera module 10 may include at least one of an autofocus function, a zoom function, and an OIS function. The camera module 10 may process a still image or video frame obtained by an image sensor in a shooting mode or a video call mode. The processed image frame may be displayed on a display unit (not shown) of the mobile terminal 3000 and may be stored in a memory (not shown). In addition, although not shown in the drawing, the camera module may be further disposed on the front side of the mobile terminal 3000. The camera module 10 may include a first camera module 10A and a second camera module 10B. At this time, at least one of the first camera module 10A and the second camera module 10B may include a camera module including the first camera actuator 1000 and the second camera actuator 2000 described above. Accordingly, the camera module may provide an OIS function together with an autofocus (AF) function. In particular, in the camera module, the first and third lens assemblies 210 and 230 are disposed at fixed positions, and the second lens assembly 220 is provided to be movable in the optical axis direction, so that the entire length (TTL) of the optical system may be constant. Accordingly, the camera module can be compactly provided when photographing a subject located at infinity or a near distance (about 30 mm) without increasing the overall length of the camera module, for example, the optical system.

The mobile terminal 3000 may further include an autofocus device 3010. The autofocus device 3010 may include an autofocus function using a laser. The autofocus device 3010 may be mainly used in a condition in which an autofocus function using an image of the camera module 10 is degraded, for example, a proximity of 10 m or less or a dark environment. The autofocus device 3010 may include a light emitting portion including a vertical cavity surface emitting laser (VCSEL) semiconductor device and a light receiving portion such as a photodiode that converts light energy into electrical energy. The mobile terminal 3000 may further include a flash module 3030. The flash module 3030 may include a light emitting device emitting light therein. The flash module 3030 may be operated by a camera operation of a mobile terminal or a user's control.

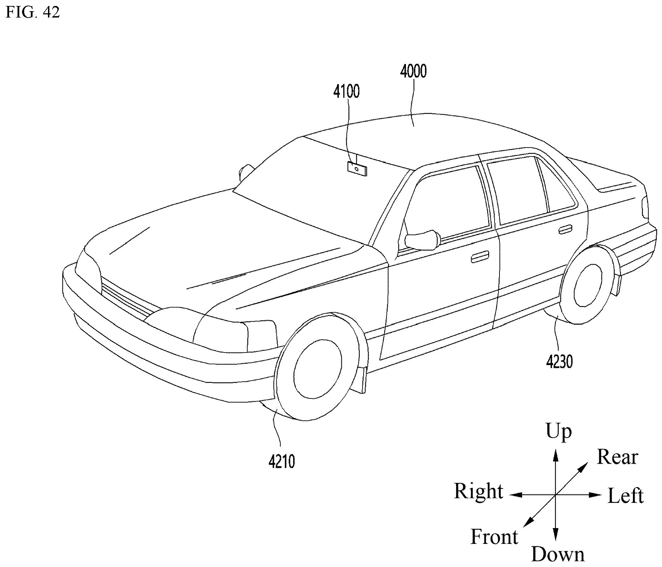

FIG. 42 is a perspective view of a vehicle to which a camera module according to an embodiment is applied. For example, FIG. 42 is an external view of a vehicle equipped with a vehicle driving assistance device to which the camera module 10 according to the embodiment is applied.

Referring to FIG. 42, a vehicle 4000 according to an embodiment may include wheels 4210 and 4230 rotating by a power source and a camera module 4100. The camera module 4100 may be disposed toward at least one of the front, rear, side, top, and bottom directions of the vehicle to process a still image or video frame. In this case, the camera module 4100 may include the first camera actuator 1000 and the second camera actuator 2000 described above. Accordingly, the camera module may provide an OIS function together with an AF or zoom function. The camera module 4100 may be disposed in the vehicle 4000 to provide various information. For example, the camera module 4100 may capture a front image or surrounding image of the vehicle 4000 and obtain image information through a camera sensor. The camera module 4100 may use the obtained image information to determine a lane unidentified situation and provide information on a virtual lane when the lane is not identified. The camera module 4100 may acquire a front image of the vehicle 4000, and a processor (not shown) may provide image information by analyzing an object included in the front image. When the image captured by the camera module 4100 includes objects such as medians, curbs, and street trees corresponding to lanes, adjacent vehicles, driving obstacles, and indirect road markings, the processor may detect these objects and provides image information. At this time, the processor may acquire distance information to the object detected through the camera module 4100 to further supplement image information. The image information may be information about an object photographed in an image.

Features, structures, effects, etc. described in the above embodiments are included in at least one embodiment of the invention, and are not necessarily limited to only one embodiment. Furthermore, features, structures, effects, etc. illustrated in each embodiment may be combined or modified for other embodiments by those of ordinary skill in the art to which the embodiments belong. Accordingly, the contents related to such combinations and modifications should be interpreted as being included in the scope of the invention. In addition, although the embodiment has been described above, it is only an example and does not limit the invention, and those of ordinary skill in the art to which the invention pertains are exemplified above in a range that does not depart from the essential characteristics of the present embodiment. It may be seen that various modifications and applications that have not been made are possible. For example, each component specifically shown in the embodiment may be implemented by modification. And the differences related to these modifications and applications should be construed as being included in the scope of the invention defined in the appended claims.

## Claims

1. A camera actuator comprising:
a first lens assembly;
a second lens assembly disposed under the first lens assembly and including a second lens portion;
a third lens assembly disposed under the second lens assembly;
a driving portion moving the second lens assembly in an optical axis direction; and
a magnet holder disposed between the second lens assembly and the driving portion,
wherein the driving portion comprises:
a magnet disposed on the magnet holder;
a yoke facing the magnet in a first direction; and
a coil disposed between the magnet and the yoke,
wherein a center of the yoke is disposed on a plane different from a first plane passing through the optical axis and a center of the magnet.

2. The camera actuator of claim 1, wherein a center of the coil is disposed on a same plane as the first plane.

3. The camera actuator of claim 2, wherein the center of the yoke is disposed at a position higher than the centers of the magnet and the coil based on the optical axis and a third direction perpendicular to the first direction.

4. The camera actuator of claim 2, wherein the center of the yoke is disposed at a position lower than the centers of the magnet and the coil based on the optical axis and a third direction perpendicular to the first direction.

5. The camera actuator of claim 3, comprising: a first guide portion disposed on one side of the magnet holder; and
a ball bearing disposed between the magnet holder and the first guide portion,
wherein the first guide portion is disposed between the magnet holder and the yoke.

6. The camera actuator of claim 5, wherein the ball bearing based on the optical axis and the third direction perpendicular to the first direction includes a first ball bearing disposed at a higher than the optical axis, and a second ball bearing disposed at a position lower than the optical axis, and
wherein the yoke based on the first direction overlaps the first ball bearing and does not overlap the second ball bearing.

7. The camera actuator of claim 6, wherein the magnet holder comprises: a first stepped portion contacting the first ball bearing, and a second step portion in contact with the second ball bearing,
wherein the first and second stepped portions have symmetrical shapes to each other with respect to a virtual first line passing through the optical axis and the center of the magnet holder in the first direction.

8. The camera actuator of claim 7, wherein the first guide portion includes a first rail in contact with the first ball bearing and facing the first stepped portion, and a second rail in contact with the second ball bearing and facing the second stepped portion, and
wherein the first and second rails have shapes asymmetrical to each other based on the first line.

9. The camera actuator of claim 8, wherein the first stepped portion includes a first stepped surface facing the first ball bearing in the first direction and a second stepped surface facing the first ball bearing in the third direction,
wherein the second step portion includes a third step surface facing the second ball bearing in the first direction and a fourth step surface facing the second ball bearing in the third direction, and
wherein an angle formed by the first and second stepped surfaces is a same as an angle formed by the third and fourth stepped surfaces.

10. The camera actuator of claim 9, wherein the first rail includes a first rail surface facing the first ball bearing in the first direction and a second rail surface facing the first ball bearing in the third direction,
wherein the second rail includes a third rail surface facing the second ball bearing in the first direction and a fourth rail surface facing the second ball bearing in the third direction,
wherein an angle formed by the first and second rail surfaces is a same as an angle formed by the third and fourth rail surfaces, and
wherein an angle formed by the first and second rail surfaces is greater than an angle formed by the first and second stepped surfaces.

11. The camera actuator of claim 10, wherein a distance between the first stepped surface and the first rail surface in the first direction is equal to a distance between the third stepped surface and the third rail surface in the first direction, and
wherein a distance between the second stepped surface and the second rail surface in the third direction is different from a distance between the fourth stepped surface and the fourth rail surface in the third direction.

12. The camera actuator of claim 11, wherein the first ball bearing is in contact with the first step surface, the second step surface, the first rail surface and the second rail surface,
wherein the second ball bearing is in contact with at least two surfaces of the third step surface, the fourth step surface, the third rail surface, and the fourth rail surface, and
wherein the second ball bearing is in contact with the third stepped surface and the third rail surface, and is spaced apart from the fourth stepped surface and the fourth rail surface.

13. A camera actuator comprising:
a first lens assembly;
a second lens assembly disposed under the first lens assembly and including a second lens portion;
a third lens assembly disposed under the second lens assembly;
a driving portion moving the second lens assembly in an optical axis direction; and
a magnet holder disposed between the second lens assembly and the driving portion,
wherein the second lens assembly includes a protruding portion disposed on one side surface facing the magnet holder,
wherein the magnet holder is disposed on one side surface facing the one side surface of the second lens assembly and includes a concave portion into which the protruding portion is inserted,
wherein the one side surface of the second lens assembly is in contact with the one side surface of the magnet holder,
wherein the protruding portion and the concave portion are spaced apart from each other.

14. The camera actuator of claim 13, wherein the one side surface of the second lens assembly and the one side surface of the magnet holder are parallel and in direct contact with each other,
wherein the camera actuator includes an adhesive member disposed between the protruding portion and the concave portion,
wherein the second lens assembly and the magnet holder are coupled via the adhesive member,
wherein the adhesive member is spaced apart from the one side surface of the second lens assembly and the one side surface of the magnet holder.

15. The camera actuator of claim 14, wherein the second lens assembly includes a first protruding portion and a second protruding portion protruding in a first direction toward the concave portion of the magnet holder, and
wherein the magnet holder includes a first concave portion disposed on a region corresponding to the first protruding portion and a second concave portion disposed on a region corresponding to the second protruding portion.

16. The camera actuator of claim 15, wherein a height of each of the first and second protruding portions in the first direction is smaller than a depth of each of the first and second concave portions in the first direction,
wherein a width of each of the first and second protruding portions in a third direction is smaller than a width of each of the first and second concave portions in the third direction, and
wherein the third direction is a direction perpendicular to the first direction.

17. The camera actuator of claim 16, wherein the first concave portion comprises a first inner surface extending from the one side surface of the magnet holder, and a first bottom surface extending from one end of the first inner surface,
wherein the second concave portion includes a second inner surface extending from one end of the first bottom surface, and
a second bottom surface extending from one end of the second inner surface,
wherein the first and second inner surfaces have different inclination angles from each other with respect to one side surface of the magnet holder.

18. The camera actuator of claim 15, wherein the first protruding portion includes a first outer surface extending from the one side surface of the second lens assembly; and a third bottom surface extending from one end of the first outer surface,
wherein the second protruding portion include a second outer surface extending from one end of the third bottom surface; and a fourth bottom surface extending from one end of the second outer surface, and
wherein the first and the second outer surfaces have different inclination angles from each other with respect to the one side surface of the second lens assembly.

19. The camera actuator of claim 15, wherein the second concave portion includes a 2-1 concave portion and a 2-2 concave portion spaced apart from the 2-1 concave portion in a second direction,
wherein the second direction is an optical axis direction of the second lens assembly and is perpendicular to the first direction,
wherein the protruding portion overlaps the 2-1 concave portion and does not overlap the 2-2 concave portion based on the first direction, and
wherein the magnet holder includes a bridge portion disposed between the 2-1 concave portion and the 2-2 concave portion.

20. A camera module comprising:
a first camera actuator driven for an auto focusing or zoom function; and
a second camera actuator driven for an optical image stabilizer (OIS) function;
wherein the first camera actuator comprises a camera actuator according to claim 1 or 13,
wherein light incident on the camera module from an outside is incident on the first camera actuator through the second camera actuator.
